# EUROPEAN PATENT SPECIFICATION

(11) **EP 3 143 489 B1**
(45) Date of publication and mention of the grant of the patent: **04.01.2023**
(21) Application number: 15792121.4
(22) Date of filing: 24.04.2015
(51) Int. Cl.: G06F 3/12, H04N 1/00

(54) **OUTPUT SYSTEM, TERMINAL APPARATUS, AND OUTPUT METHOD**
AUSGABESYSTEM, ENDGERÄTEVORRICHTUNG UND AUSGABEVERFAHREN
SYSTÈME DE SORTIE, APPAREIL TERMINAL, ET PROCÉDÉ DE SORTIE

(30) Priority: 13.05.2014 JP 2014099327
(43) Date of publication of application: 22.03.2017
(73) Proprietor: Ricoh Company, Ltd., Tokyo 143-8555 (JP)
(72) Inventor: MORI, Shinya, Tokyo 143-8555 (JP)
(74) Representative: SSM Sandmair
(86) International application number: PCT/JP2015/063156
(87) International publication number: WO 2015/174309

(56) References cited:
- EP-A2- 2 060 974
- US-A1- 2010 265 541
- US-A1- 2012 120 443
- US-A1- 2013 163 041

## Description

### TECHNICAL FIELD

The present invention relates to an output system, a terminal apparatus, and an output method.

### BACKGROUND ART

A data processing apparatus that distributes printing jobs to image forming apparatuses according to predetermined conditions is known in the related art. For example, see Patent Document 1 listed below.

EP 2 060 974 A2 provides an image forming apparatus capable of ensuring print restrictions at a plurality of levels.

### SUMMARY OF THE INVENTION

### PROBLEMS TO BE SOLVED BY THE INVENTION

For example, a user selects a virtual printer driver or a real printer driver from among application programs in a printing system which is an example of an output system, and sends a request for a printing job to the printing system so that the printing job is performed according to values of print setting items of the virtual printer driver or the real printer driver.

However, the virtual printer driver usually includes shared setting items (first output setting items) which are independent of a printer at an output destination. The number of print setting items that can be selected for the virtual printer driver is rather smaller than the number of print setting items that can be selected for the real printer driver. Hence, if the virtual printer driver is used, it is difficult to draw the best out of the functions provided by the printer at the output destination.

A similar problem also arises in not only the printing system but also in an output system. When a user selects a virtual device driver including shared setting items (first output setting items) independent of an output apparatus at an output destination and requests the output system to output data to the output apparatus, such as a projector or a monitor, it is difficult to draw the best out of the functions provided by the output apparatus using the virtual printer driver.

### MEANS FOR SOLVING THE PROBLEMS

The invention is set out by the appended set of claims. The embodiments and/or examples of the following description which are not covered by the claims, are provided for illustrative purpose only and are only intended to assist the reader in understanding the present invention. However, such embodiments and/or examples which are not covered by the claims do not form part of the present invention that is solely defined by the claims.

Other objects, features and advantages of embodiments will be apparent from the following detailed description when read in conjunction with the accompanying drawings.

### BRIEF DESCRIPTION OF THE DRAWINGS

FIG. 1 is a block diagram showing a configuration of a printing system according to an embodiment.
FIG. 2 is a block diagram showing a hardware configuration of a computer according to an embodiment.
FIG. 3 is a block diagram showing a configuration of a client terminal before a software package according to an embodiment is installed therein.
FIG. 4 is a block diagram showing a configuration of the software package according to the embodiment.
FIG. 5 is a block diagram showing a configuration of the client terminal after the software package according to the embodiment is installed.
FIG. 6 is a block diagram showing a configuration of an output control plug-in.
FIG. 7 is a block diagram showing a configuration of a rule-based printing control unit.
FIG. 8 is a block diagram of a configuration of a document registration plug-in.
FIG. 9 is a diagram showing an image of an environment setting screen.
FIG. 10 is a diagram showing an image of another environment setting screen.
FIG. 11 is a diagram showing an image of a document management device setting screen.
FIG. 12 is a diagram showing an image of a scenario management screen.
FIG. 13 is a diagram showing an image of a scenario setting screen.
FIG. 14 is a diagram showing an image of a rule setting screen.
FIG. 15 is a diagram showing an image of a setting screen when the type of condition selected is "print setting".
FIG. 16 is a diagram showing an image of a setting screen when the type of condition selected is "document name".
FIG. 17 is a diagram showing an image of a setting screen when the type of condition selected is "keyword".
FIG. 18 is a diagram showing an image of a setting screen when the type of condition selected is "the number of pages".
FIG. 19 is a diagram showing an image of a setting screen when the type of condition selected is "date/time".
FIG. 20 is a diagram showing an image of another rule setting screen.
FIG. 21 is a diagram showing an image of a setting screen when the type of action selected is "printing".
FIG. 22 is a diagram showing an image of a setting screen in which the choices of printers are set up.
FIG. 23 is a diagram showing an image of a setting screen when the type of action selected is "change of print setting".
FIG. 24 is a diagram showing an image of a setting screen when the type of action selected is "notification of a message".
FIG. 25 is a flowchart for explaining a printing process performed by the printing system according to the embodiment.
FIG. 26 is a diagram showing a screen transition.
FIG. 27 is a diagram showing a screen transition.
FIG. 28 is a diagram showing a screen transition.
FIG. 29 is a diagram for explaining an output destination distribution process performed when a higher priority is given to the print setting of a virtual printer driver than to that of a real printer driver.
FIG. 30 is a diagram for explaining an output destination distribution process performed when a higher priority is given to the print setting of the real printer driver than to that of the virtual printer driver.
FIG. 31 is a diagram for explaining the handling of print setting values in printing modes.

### MODE FOR CARRYING OUT THE INVENTION

A description will be given of embodiments with reference to the accompanying drawings.

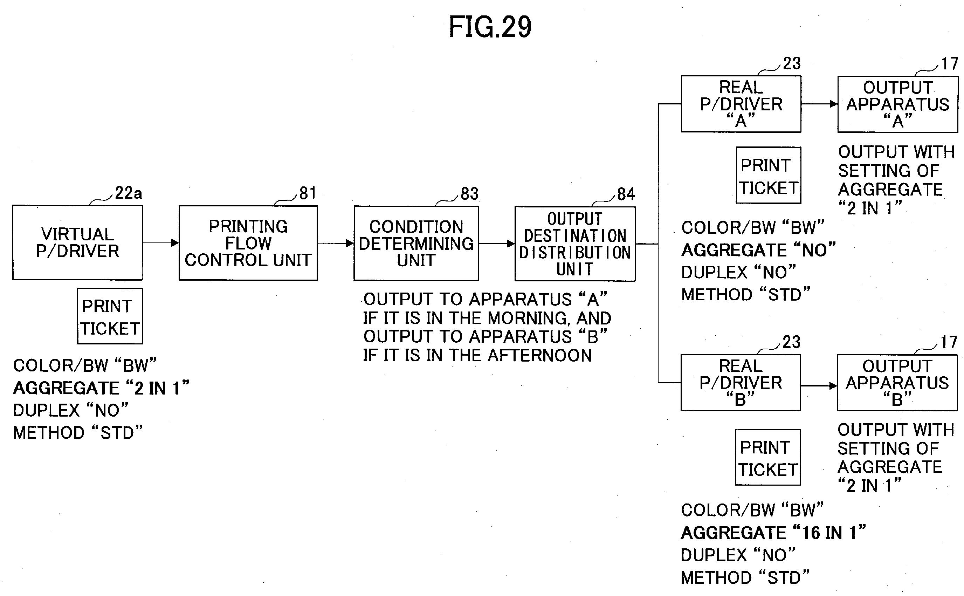

In the following, a printing system will be described as an example of an output system according to the invention, but the output system according to the invention should not be construed as being limited to the printing system. For example, the output system according to the invention may be a system configured to perform printing, projecting, displaying, transmitting, etc., of output data. An embodiment of the invention covered by the claims is described in figures 29 to 31 and the passages concerning said figures in this description. The other passages and figures represent embodiments not covered by the claims but nevertheless useful for understanding the invention.

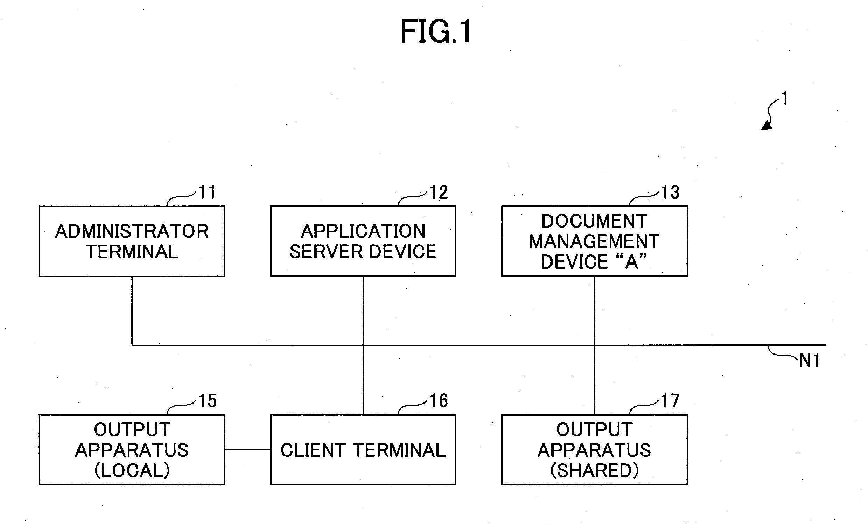

FIG. 1 is a block diagram showing a configuration of a printing system 1 according to an embodiment. As shown in FIG. 1, the printing system 1 includes an administrator terminal 11, an application server device 12, a document management device "A" 13, a client terminal 16, and a shared output apparatus 17, which are connected together via a network N1, such as a LAN (local area network). The printing system 1 further includes a local output apparatus 15 which is connected with the client terminal 16.

Each of the administrator terminal 11, the application server device 12, the document management device "A" 13, the local output apparatus 15, the client terminal 16, and the shared output apparatus 17 includes a wired or wireless communication unit.

An example of the printing system 1 including one administrator terminal 11, one application server device 12, one document management device "A" 13, one local output apparatus 15, one client terminal 16, and one shared output apparatus 17 is illustrated in FIG. 1. However, the printing system 1 may include a plurality of components for one or more of these apparatuses. Moreover, the printing system 1 may include a plurality of the document management devices "A" 13, or may include a plurality of document management devices 13, such as document management devices "A", "B", and "C".

The document management devices "A", "B", and "C" may differ in the document management device suppliers, their functions, or their specifications. For example, when the suppliers differ, the implementations of the document management devices 13 (or application programs installed in the document management devices 13) are not the same. Moreover, there may be a case in which the document management devices 13 have mutually different functions, or a case in which the document management devices 13 have the same functions but include mutually different APIs (application programming interfaces).

Furthermore, the document management device "A" 13 may be configured to have a dedicated function for a particular use. For example, the document management device "A" 13 for managing billings is configured to have a function to manage billing numbers. The document management device "A" 13 for managing patient's clinical recordings is configured to have a function to manage patient names. Thus, there may also be a case in which the document management devices 13 may differ in the items of bibliographic information when managing document data.

What types of the document management devices 13 are to be included in a system environment of the printing system 1 may suitably be determined by an administrator of the system or the like. The printing system 1 according to this embodiment is applicable to a system including one or more document management devices 13 or one or more types of the document management devices 13.

The administrator terminal 11 may be an information processing apparatus, such as a PC (personal computer), which is used by an administrator. The administrator terminal 11 makes, in response to receiving a request from the administrator, the setting of the client terminal 16 used by each user, and transmits the content of the setting (setting information) to the application server device 12 or the client terminal 16.

The application server device 12 may be implemented by one or more information processing apparatuses. The application server device 12 stores application programs, such as printing application programs, distributed to the client terminal 16, and print setting data which are setting data of the application programs. The application server device 12 distributes the printing application programs and the print setting data, stored therein, to the client terminal 16.

The document management device "A" 13 may be implemented by one or more information processing apparatuses. The document management device "A" 13 registers, in response to receiving a request from the client terminal 16, a document, and manages the registered document.

The output apparatus 15 may be an image forming apparatus, such as a printer, which is directly connected to the client terminal 16 via a wired or wireless communication interface. The output apparatus 15 may be any of an image forming apparatus, such as a printer, a copier, a multifunction peripheral, or a laser printer, an audio output apparatus which outputs audio data, such as an audio player, a projection device, such as a projector, and a display device, such as a monitor, which performs displaying of output data.

The client terminal 16 may be an information processing apparatus, such as a PC, which is used by a user. The client terminal 16 may be implemented by a terminal apparatus, such as a smart phone, a mobile phone, or a PC.

The output apparatus 17 may be an image forming apparatus, such as a printer, which is connected to the network N1 by a wired or wireless communication interface. Alternatively, the output apparatus 17 may be implemented by an audio output apparatus which outputs audio data, such as an audio player, a projection device, such as a projector, or a display device, such as a monitor, which performs displaying of output data.

The printing system 1 shown in FIG. 1 may be an example of the output system. Alternatively, the administrator terminal 11 may be eliminated from the printing system 1, or the application server device 12 may be eliminated from the printing system 1.

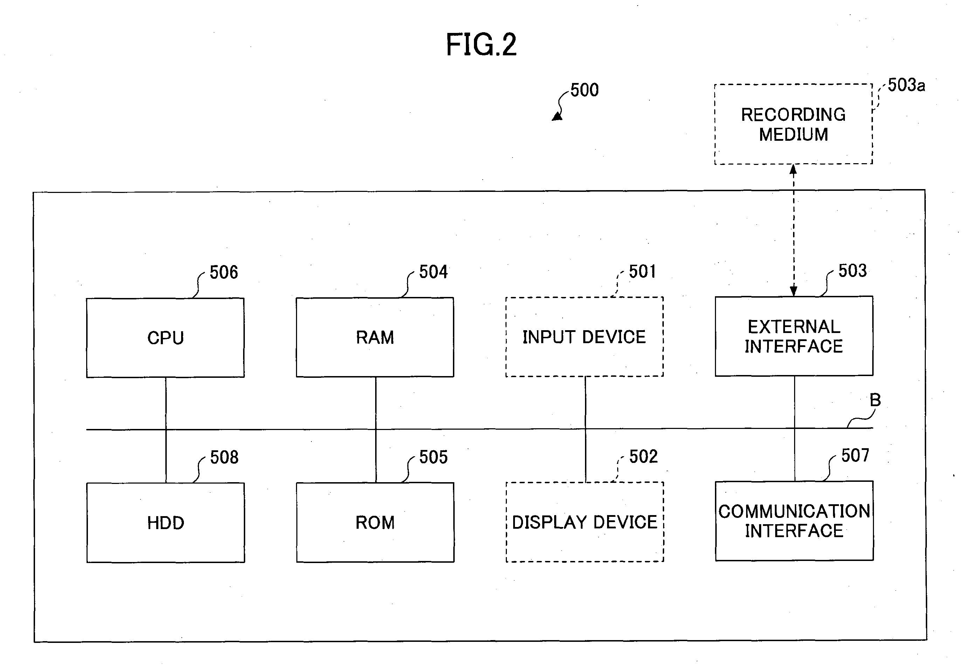

Each of the administrator terminal 11, the application server device 12, the document management device "A" 13, and the client terminal 16, shown in FIG. 1, may be implemented by a computer having a hardware configuration shown in FIG. 2. FIG. 2 is a block diagram showing a hardware configuration of a computer 500 according to an embodiment.

As shown in FIG. 2, the computer 500 includes an input device 501, a display device 502, an external interface 503, a RAM (random access memory) 504, a ROM (read-only memory) 505, a CPU (central processing unit) 506, a communication interface 507, and a HDD (hard disk drive) 508, which are interconnected by a bus B. The input device 501 and the display device 502 may be optionally connected to the computer 500 when required.

The input device 501 may include a keyboard, a mouse, a touch panel, etc., and may be used by a user to input a manipulation signal. The display device 502 may include a display, and may display a result of a process performed by the computer 500.

The communication interface 507 provides an interface which connects the computer 500 to the network N1. Hence, the computer 500 is capable of performing data communication through the communication interface 507.

The HDD 508 is an example of a nonvolatile memory which stores programs and data. The programs and data stored in the HDD 508 may include an OS (operating system) as system software to control the entire computer 500, and application programs (which will also be called applications) which are executed on the OS to offer various functions. Alternatively, the computer 500 may be constructed to include, instead of the HDD 508, a drive device using a flash memory as a storage medium (e.g., a solid state drive SSD).

The external interface 503 provides an interface which connects the computer 500 to an external device. The external device may be a recording medium 503a. Hence, the computer 500 is capable of reading data from and/or writing data to the recording medium 503a through the external interface 503. Examples of the recording medium 503a may include a flexible disk, a CD, a DVD, an SD memory card, a USB memory, etc.

The ROM 505 is an example of a nonvolatile semiconductor memory which can store programs and data even after power-down. The programs and data stored in the ROM 505 may include a BIOS (basic input/output system) which is executed upon a startup of the computer 500, the OS setting, the network setting, etc. The RAM 504 is an example of a volatile semiconductor memory which temporarily stores programs and data.

The CPU 506 is a processor which controls the entire computer 500 and performs the function of the computer 500 by reading out the programs and data from the memory, such as the ROM 505 or the HDD 508, to the RAM 504 and executing the same to perform a process.

By using the hardware configuration of the computer 500 described above, the administrator terminal 11, the application server device 12, the document management device "A" 13, and the client terminal 16 in the output system 1 according to this embodiment perform various processes which will be described later.

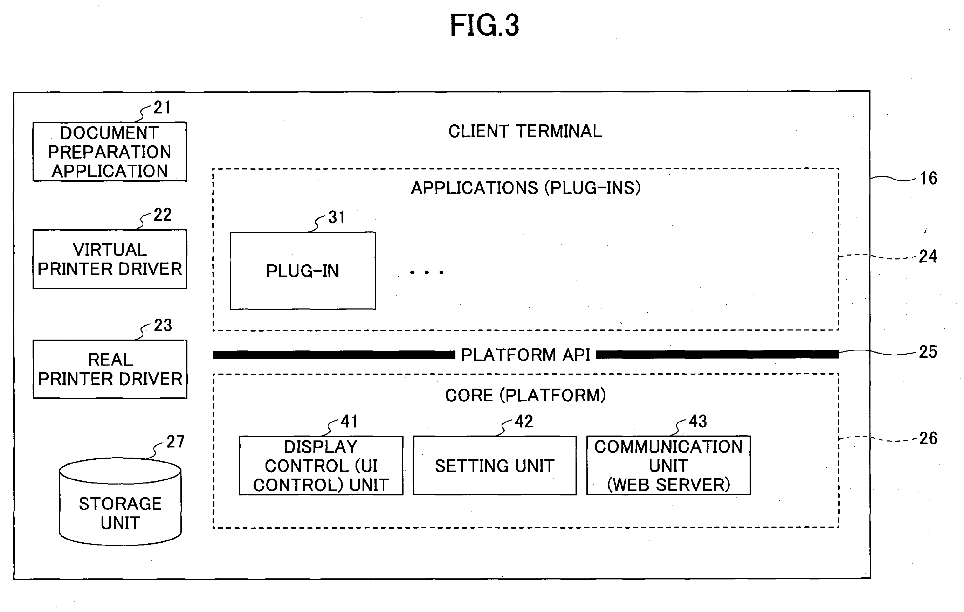

The client terminal 16 before a software package according to an embodiment is installed therein may be implemented by a configuration as shown in FIG. 3. FIG. 3 is a block diagram showing a configuration of the client terminal 16 before the software package according to this embodiment is installed therein.

As shown in FIG. 3, the client terminal 16 includes a document preparation application 21, a virtual printer driver 22, a real printer driver 23, a plug-in 24, a platform API 25, a platform (core) 26, and a storage unit 27, which are implemented by a processor of the client terminal 16 executing the programs read from the memory.

One or more plug-ins 31 may be installed in the plug-in 24. The platform 26 includes a display control (UI control) unit 41, a setting unit 42, and a communication unit 43. The document preparation application 21 is an example of an application that receives a printing request from a user. Alternatively, the document preparation application 21 may be an application which receives a request of outputting data from a user.

The virtual printer driver 22 is a printer driver which transforms application data into intermediate printing data that is independent of a printer, and outputs the intermediate printing data. The intermediate printing data is a printing data that is independent of the type of the output apparatus 17. For example, data in the XPS (XML Paper Specification) format is an example of the intermediate printing data. The application data is an example of the target output data. A virtual printer driver for using the plug-in 31 may be included in the virtual printer driver 22.

The real printer driver 23 is a printer driver which transforms intermediate printing data into real printing data in a format which can be printed by the output apparatus 15 or the output apparatus 17, and outputs the real printing data. For example, data in the RAW image format is an example of the real printing data. Moreover, the real printer driver 23 transforms intermediate printing data into machine-readable data in a format which is registered in the document management device "A" 13, and outputs the machine-readable data.

The plug-in 24 is software which operates on the platform 26. The plug-in 24 is capable of using a function of the platform 26 by using the platform API 25.

The platform API 25 provides an interface for enabling the plug-in 24 to use a function of the platform 26. The platform API 25 is a pre-defined interface which is provided to enable the platform 26 to receive a request from the plug-in 24. For example, the platform API 25 is provided to include a set of functions, a set of classes, etc.

In the platform 26, the display control unit 41 is configured to control displaying of the display device 502 in response to receiving a request from the document preparation application 21 or the plug-in 24. The setting unit 42 is configured to set up the plug-in 24. The communication unit 43 is configured to communicate with the document management device "A" 13. The storage unit 27 is configured to store the setting and others.

In the client terminal 16, shared functions which are used by the plug-ins 24 are aggregated in the platform 26, and processes are aggregated. The software configuration shown in FIG. 3 is an example, and it is not essential that the software of the client terminal 16 is formed as in the configuration shown in FIG. 3.

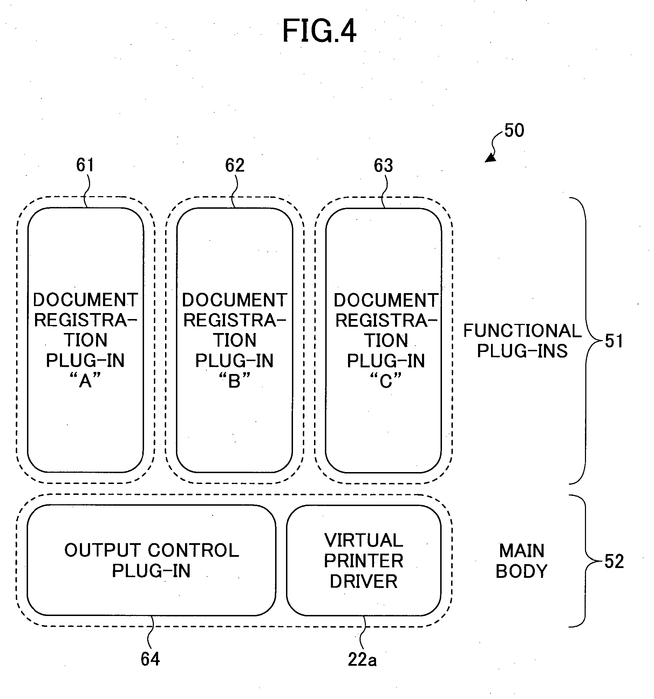

For example, the plug-ins 24 may be installed by downloading a software package (as shown in FIG. 4) from the application server device 12, and the setting information of each of the plug-ins 24 may be installed similarly.

FIG. 4 is a block diagram showing a configuration of a software package 50 according to an embodiment. As shown in FIG. 4, the software package 50 is configured to include functional plug-ins 51, a main body 52, and a virtual printer driver 22a.

The functional plug-ins 51 include a document registration plug-in "A" 61, a document registration plug-in "B" 62, and a document registration plug-in "C" 63. The main body 52 includes an output control plug-in 64. One or more of the document registration plug-in "A" 61, the document registration plug-in "B" 62, and the document registration plug-in "C" 63 may be appropriately added and used. Namely, it is not essential that all the three plug-ins 61-63 are included. Rather, a desired one of the document registration plug-in "A" 61, the document registration plug-in "B" 62, and the document registration plug-in "C" 63 may be selected and the selected plug-in may be provided in the software package 50.

Although the three plug-ins: the document registration plug-in "A" 61, the document registration plug-in "B" 62, and the document registration plug-in "C" 63 are included in the software package 50 shown in FIG. 4, it is possible that one or more plug-ins be included in the software package 50.

Each of the document registration plug-in "A" 61, the document registration plug-in "B" 62, and the document registration plug-in "C" 63 has a function to register a document in the document management device "A" 13 (to output machine-readable data). The output control plug-in 64 has a function to perform a rule-based printing process (to output printing data). Moreover, the output control plug-in 64 has a function to send a document registration execution request of performing the document registration in the document management device "A" 13, to the document registration plug-in "A" 61.

Although the example of the software package 50 in which the software package 50 is divided into the functional plug-ins 51 and the main body 52 is shown in FIG. 4, the way the plug-ins are divided in the example shown is not essential. The software package 50 may be provided with one plug-in, and the plug-ins may be divided in a way other than that shown in FIG. 4. For example, the main body 52 and the functional plug-ins 51 may be provided in the software package 50 in parallel with each other.

The virtual printer driver 22a is not essential for the software package 50, and the virtual printer driver 22a may be provided as being separated from the software package 50.

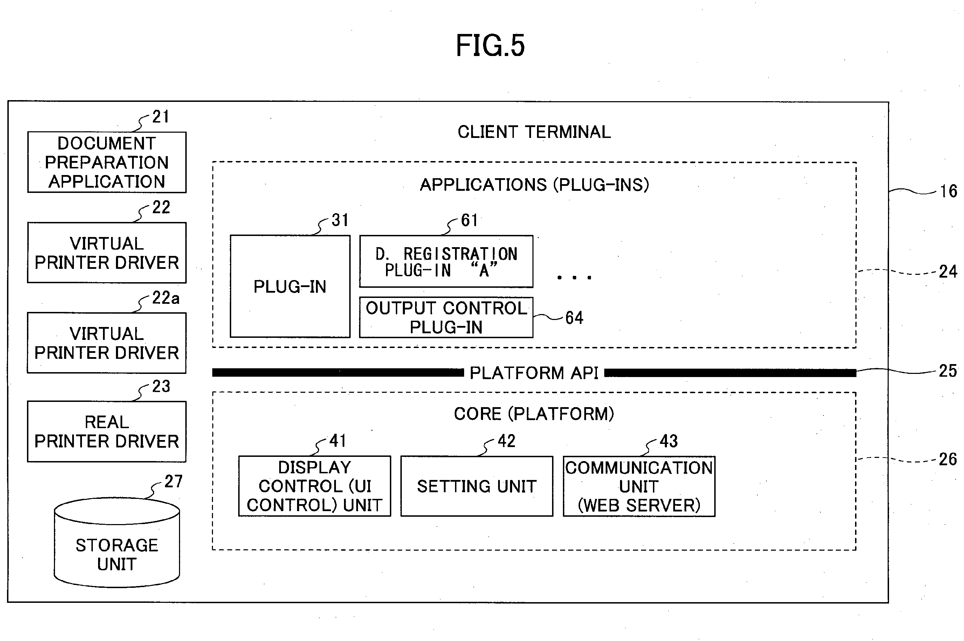

The client terminal 16 after the software package 50 according to this embodiment is installed therein may be implemented by a configuration as shown in FIG. 5. FIG. 5 is a block diagram showing a configuration of the client terminal 16 after the software package 50 according to this embodiment is installed therein.

The client terminal 16 shown in FIG. 5 has the configuration in which the software package 50 shown in FIG. 4 is installed in the client terminal 16 shown in FIG. 3. Specifically, the client terminal 16 shown in FIG. 5 is provided by adding the virtual printer driver 22a, the document registration plug-in "A" 61, and the output control plug-in 64 to the client terminal 16 shown in FIG. 3.

The virtual printer driver 22a is an example of the virtual printer driver for using the document registration plug-in "A" 61 and the output control plug-in 64 shown in FIG. 5. The virtual printer driver 22a transforms the application data into the intermediate printing data (which is independent of a printer) and outputs the intermediate printing data.

The output control plug-in 64 performs a rule-based printing process (which is in accordance with the conditions and the action) on the intermediate printing data generated by the virtual printer driver 22a. Moreover, the output control plug-in 64 sends a document registration execution request of performing the document registration in the document management device "A" 13 to the document registration plug-in "A" 61.

For example, the output control plug-in 64 performs a process to change the print setting of the intermediate printing data based on the rules, and controls the output apparatus 15 or 17 to output the real printing data by using the real printer driver 23. Moreover, when the execution request of performing the document registration in the document management device "A" 13 is received from the output control plug-in 64, the document registration plug-in "A" 61 controls the real printer driver 23 to generate machine-readable data in the PDF format (which is an example of the format registered in the document management device "A" 13) from the intermediate printing data. The document registration plug-in "A" 61 performs a control process to register the generated machine-readable data in the document management device "A" 13.

Because one or more plug-ins 24 which are desired by the administrator or the user may be appropriately installed in the client terminal 16, the configuration of the client terminal 16 is not necessarily limited to the configuration shown in FIG. 5.

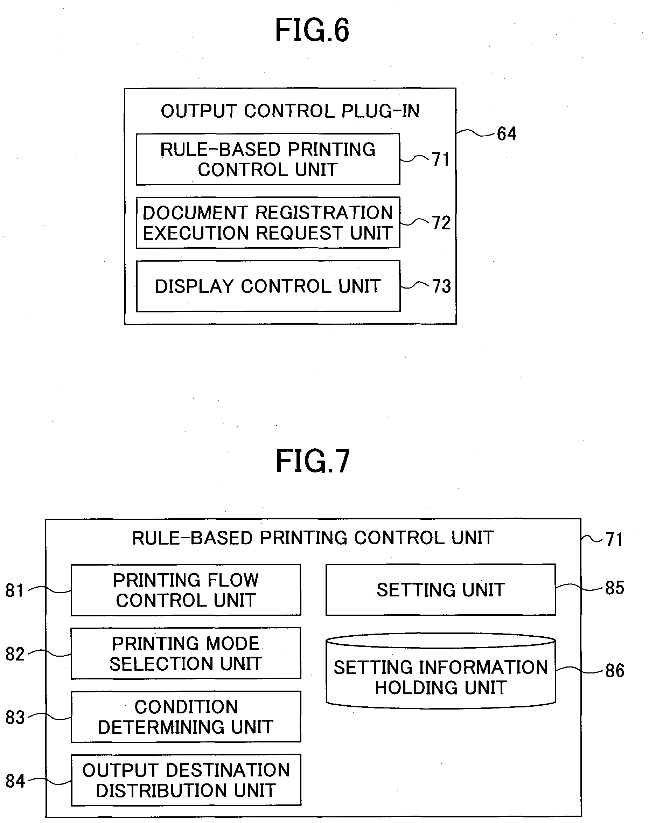

FIG. 6 is a block diagram showing a configuration of the output control plug-in 64 of the client terminal 16. As shown in FIG. 6, the output control plug-in 64 includes a rule-based printing control unit 71, a document registration execution request unit 72, and a display control unit 73.

The rule-based printing control unit 71 provides a rule-based printing function among the functions provided by the output control plug-in 64. For example, the rule-based printing control unit 71 performs the rule-based printing process on the intermediate printing data generated by the virtual printer driver 22a.

The document registration execution request unit 72 provides a function to send a document registration execution request among the functions provided by the output control plug-in 64. For example, the document registration execution request unit 72 sends a document registration execution request of performing the document registration in the document management device "A" 13 to the document registration plug-in "A" 61. For example, the display control unit 73 displays one of various setting screens (which will be described below) on the display device 502 by using the display control unit 41.

For example, the rule-based printing control unit 71 is implemented by a configuration shown in FIG. 7. FIG. 7 is a block diagram showing a configuration of the rule-based printing control unit 71. As shown in FIG. 7, the rule-based printing control unit 71 includes a printing flow control unit 81, a printing mode selection unit 82, a condition determining unit 83, an output destination distribution unit 84, a setting unit 85, and a setting information holding unit 86.

The printing flow control unit 81 controls execution of a printing flow (processing flow). The printing mode selection unit 82 determines a print setting according to a printing mode during a printing process. The condition determining unit 83 determines the conditions for output destination distribution, such as a date/time, printing pages, etc. The output destination distribution unit 84 distributes printing jobs to the output apparatus 15 or 17.

When the setting information of the rule-based printing control unit 71 is received, the setting unit 85 stores the setting information in the setting information holding unit 86. The setting information holding unit 86 stores the setting information of the rule-based printing control unit 71. Namely, the setting information holding unit 86 stores one or more rules for controlling the outputting of the second output data.

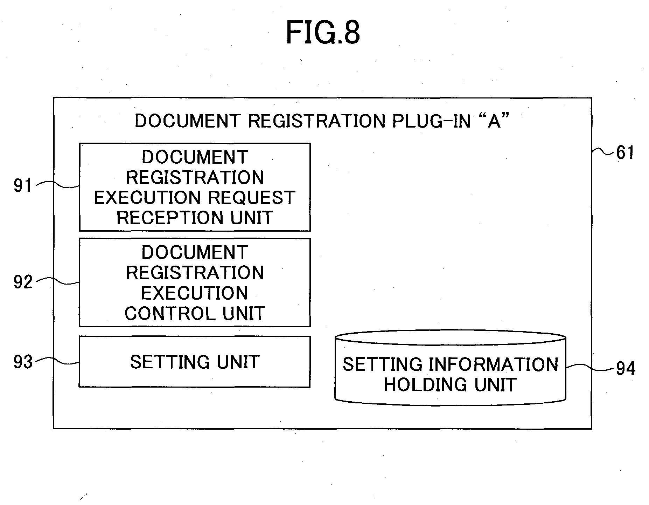

The document registration plug-in "A" 61 in the client terminal 16 is implemented by a configuration shown in FIG. 8. FIG. 8 is a block diagram showing a configuration of the document registration plug-in 61. As shown in FIG. 8, the document registration plug-in "A" 61 (shown in FIG. 7) includes a document registration execution request reception unit 91, a document registration execution control unit 92, a setting unit 93, and a setting information holding unit 94.

The document registration execution request reception unit 91 receives a document registration execution request from the document registration execution request unit 72 of the rule-based printing control unit 71. The document registration execution control unit 92 controls execution of the document registration in the document management device "A" 13, and performs the document registration in the document management device "A" 13. The setting unit 93 stores various setting information items in the setting information holding unit 94 when the setting information of the document registration plug-in "A" 61 is received. The setting information holding unit 94 stores the various setting information items in the document registration plug-in "A" 61.

The printing system 1 according to this embodiment receives various setting information items from various setting screens.

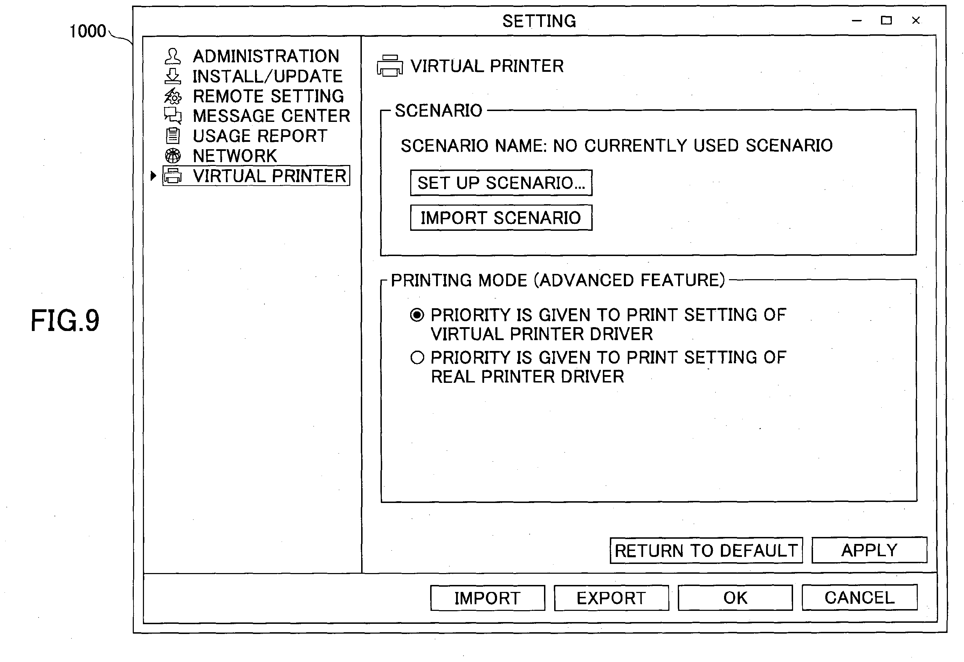

FIG. 9 is a diagram showing an image of an environment setting screen 1000. As shown in FIG. 9, the client terminal 16 receives setting of a printing mode from the environment setting screen 1000. From the environment setting screen 1000 shown in FIG. 9, a user may select either "priority is given to print setting of virtual printer driver" or "priority is given to print setting of real printer driver."

When the "priority is given to print setting of virtual printer driver" is selected, the printing mode is set to a virtual printer driver priority mode in which a higher priority is given to the print setting of the virtual printer driver 22a. When the "priority is given to print setting of real printer driver" is selected, the printing mode is set to a real printer driver priority mode in which a higher priority is given to the print setting of the real printer driver 23.

In the virtual printer driver priority mode, a higher priority is given to a value of the print setting of the virtual printer driver 22a set up by the user when inputting the output request than to a value of the default print setting of the real printer driver 23. On the other hand, in the real printer driver priority mode, a higher priority is given to a value of the default print setting of the real printer driver 23 than to a value of the print setting of the virtual printer driver 22a set up by the user when inputting the output request.

One printing mode may be set up by the client terminal 16 or each of the virtual printer drivers 22a. Or, one printing mode may be set up by the output apparatus 15 or the output apparatus 17 at the output distribution.

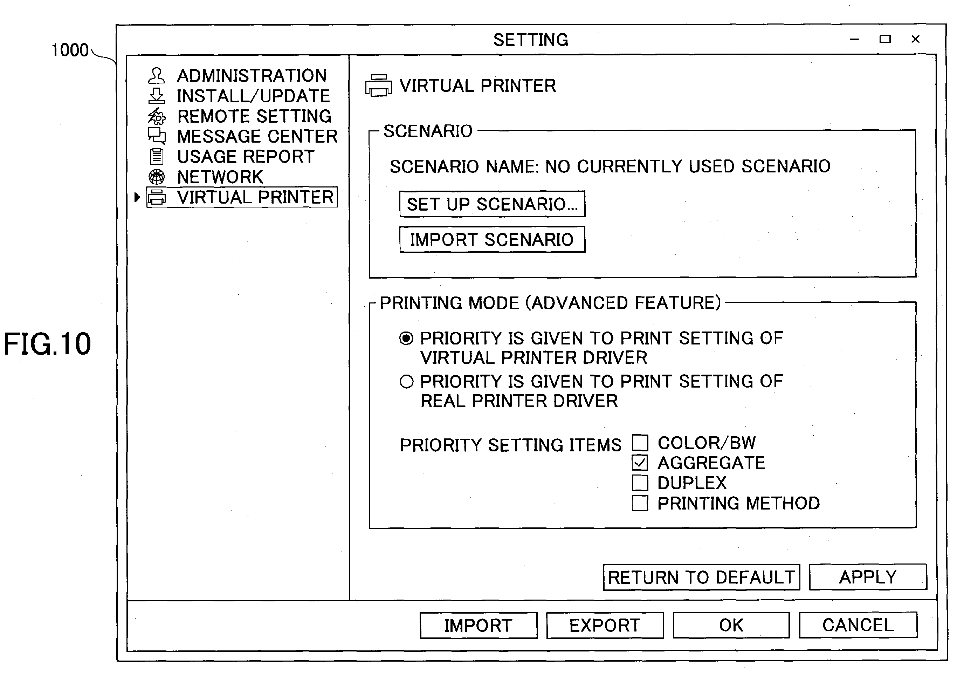

When the real printer driver priority mode is selected, the items for which a higher priority is given to the value of the default print setting of the real printer driver 23 may be provided as priority setting items as shown in an environment setting screen 1000 shown in FIG. 10. FIG. 10 is a diagram showing an image of another environment setting screen 1000.

In each of the environment setting screens 1000 shown in FIGS. 9 and 10, a scenario name, a scenario set-up button, and a scenario import button are also displayed. The scenario name displayed in the environment setting screen 1000 is a name of the currently set up scenario. The scenario set-up button is a button provided to start displaying a scenario management screen in which a scenario is set up. The scenario management screen is displayed when the client terminal 16 is started in an administrator mode. The scenario import button is a button provided to start displaying a file selection screen for importing a scenario.

The administrator may set up the scenario from the scenario management screen. The details of the scenario will be described later. The user may select a file from the file selection screen and may import the scenario by using the selected file.

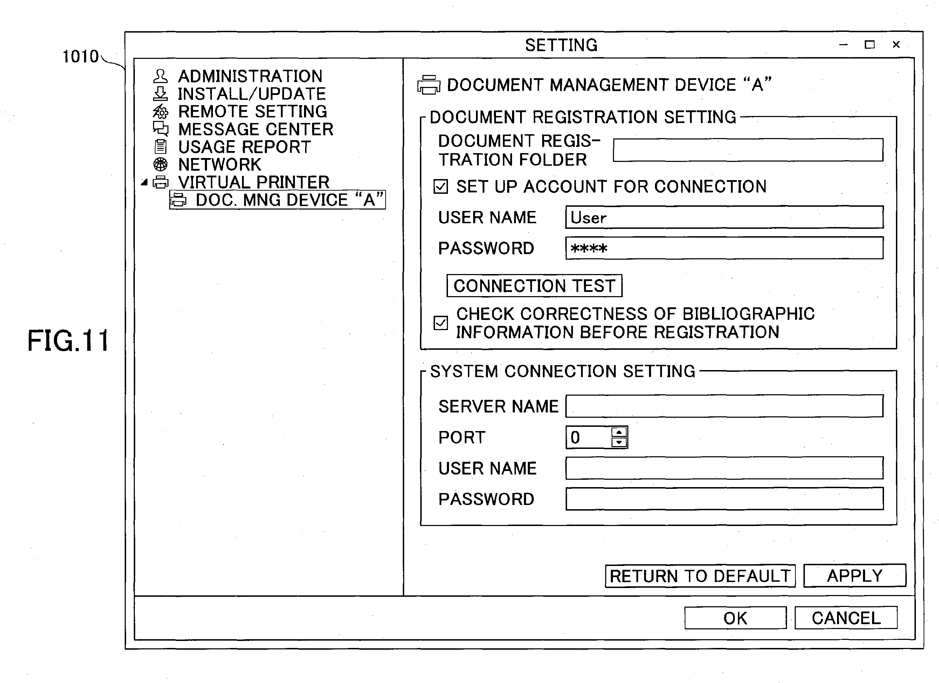

FIG. 11 is a diagram showing an image of a document management device setting screen 1010. As shown in FIG. 11, the client terminal 16 receives setting information of the document management device "A" 13 from the document management device setting screen 1010. The document management device setting screen 1010 shown in FIG. 11 includes a document registration setting field and a system connection setting field.

The document registration setting field includes setting boxes of a document registration folder, a user name, and a password. Also included in the document registration setting field are a check box for deciding whether an account for connection is to be set up, a check box for deciding whether it is to be checked before registration whether bibliographic information is correct, and a connection test button.

A folder path of a document registration folder may be inserted in the document registration folder setting box. A choice of setting up an account for accessing a document registration folder may be inserted in the check box for deciding whether the account for connection is to be set up. A user name and a password for accessing a document registration folder may be inserted in the setting boxes of the user name and the password.

The connection test button is a button for checking connection with the set-up document registration folder. If the connection test button is pressed, the client terminal 16 is caused to access the document registration folder and test the connection with the document registration folder. A choice of checking before document registration whether bibliographic information is correct may be inserted in the check box for deciding whether it is to be checked before document registration whether bibliographic information is correct.

The system connection setting field includes setting boxes of a server name, a port, a user name, and a password. A server name of the document management device "A" 13 may be inserted in the server name setting box. A port of the document management device "A" 13 may be inserted in the port setting box. A user name and a password for accessing the document management device "A" 13 may be inserted in the setting boxes of the user name and the password.

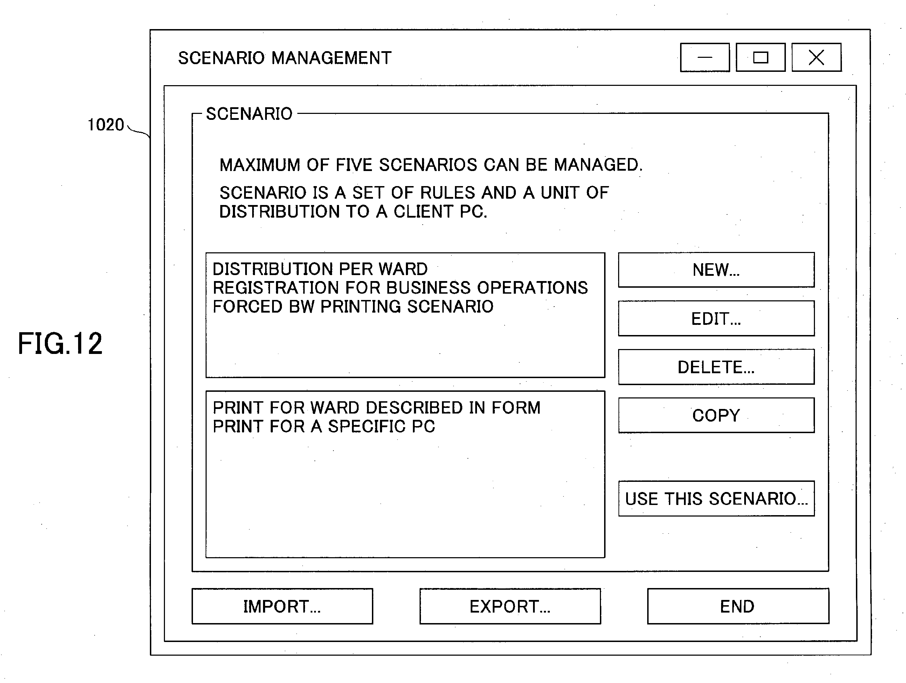

FIG. 12 is a diagram showing an image of a scenario management screen 1020. For example, the scenario management screen 1020 shown in FIG. 12 is displayed when the scenario set-up button in the environment setting screen 1000 shown in FIG. 9 or FIG. 10 is pressed by the administrator. The administrator may set up the following scenarios for performing an output workflow from the scenario management screen 1020.

A scenario may include one or more rules in combination. Each of the rules is described by a definition of action associated with conditions. The conditions are described by keywords, print setting, time, etc. Examples of the action may include a printing process, a print setting change, and associations with another system. A rule may be described by a definition of only unconditional action (action with no conditions). For example, the administrator may distribute his own defined scenario to the client terminal 16 by using a remote setting function or the like.

For example, when the client terminal 16 performs a printing process initiated by the document preparation application 21 by using the virtual printer driver 22a, the output workflow is performed in accordance with the scenario so that the output data is output to the output apparatus 17, or output to the document management device "A" 13.

In the scenario management screen 1020 shown in FIG. 12, a scenario list, a new button, an edit button, a delete button, a copy button, a button for using this scenario, an import button, and an export button are included.

A list of created scenarios may be displayed in the scenario list. The new button is a button provided for opening a scenario setting screen to create a new scenario. The edit button is a button provided for opening a scenario setting screen to edit the scenario selected from the scenario list. The delete button is a button provided for deleting a scenario from the scenario list. The copy button is a button provided for copying the scenario selected from the scenario list. The import button is a button provided for importing a scenario. The export button is a button provided for exporting a scenario.

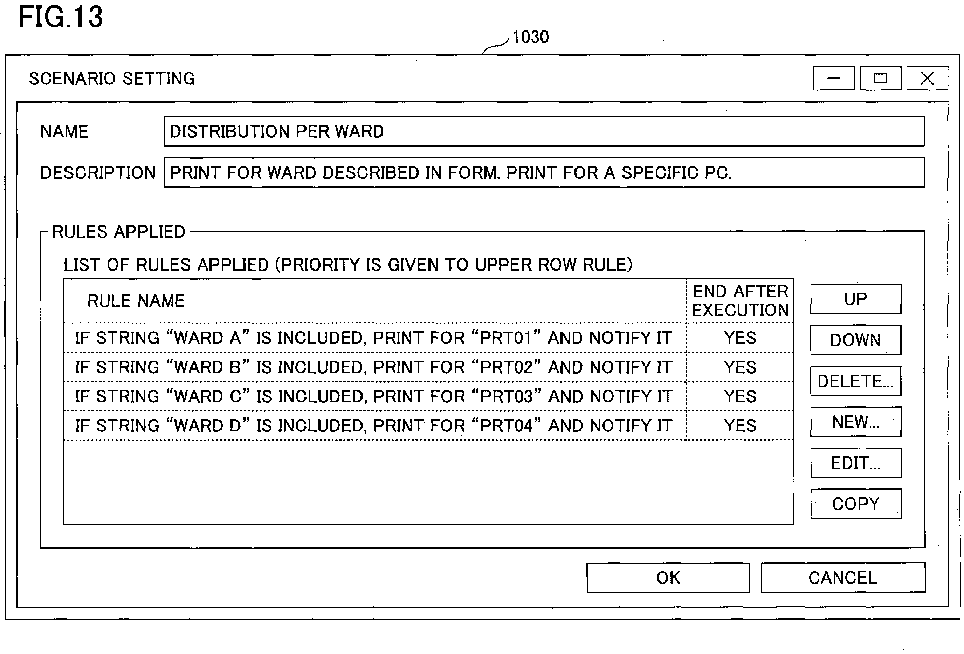

FIG. 13 is a diagram showing an image of a scenario setting screen 1030. The scenario setting screen 1030 shown in FIG. 13 includes a scenario name, a rule list, an up button, a down button, a delete button, a new button, an edit button, and a copy button.

In the scenario setting screen 1030, a name of one of the scenarios included in the scenario list of the scenario management screen 1020 shown in FIG. 12 is displayed as the scenario name, and one or more rules, which are arrayed in the order of priority of applying the rule, are displayed in the rule list. Each of the rules displayed in the rule list of the scenario setting screen 1030 is expressed with a rule name and information on whether the scenario is to be ended after execution of the rule. The information on whether the scenario is to be ended is provided to indicate whether the scenario is to be ended, without performing the following rule, after the rule is applied (or when the conditions defined in the rule are met).

The up button and the down button are provided to change the sequence (the order of priority) of the rule selected from among the rules included in the rule list of the scenario setting screen 1030. The delete button is provided to delete the rule selected from among the rules included in the rule list. The new button is provided to open a rule setting screen and create a new rule. The edit button is provided to open the rule setting screen and edit the rule selected from among the rules included in the rule list. The copy button is provided to copy the rule selected from among the rules included in the rule list.

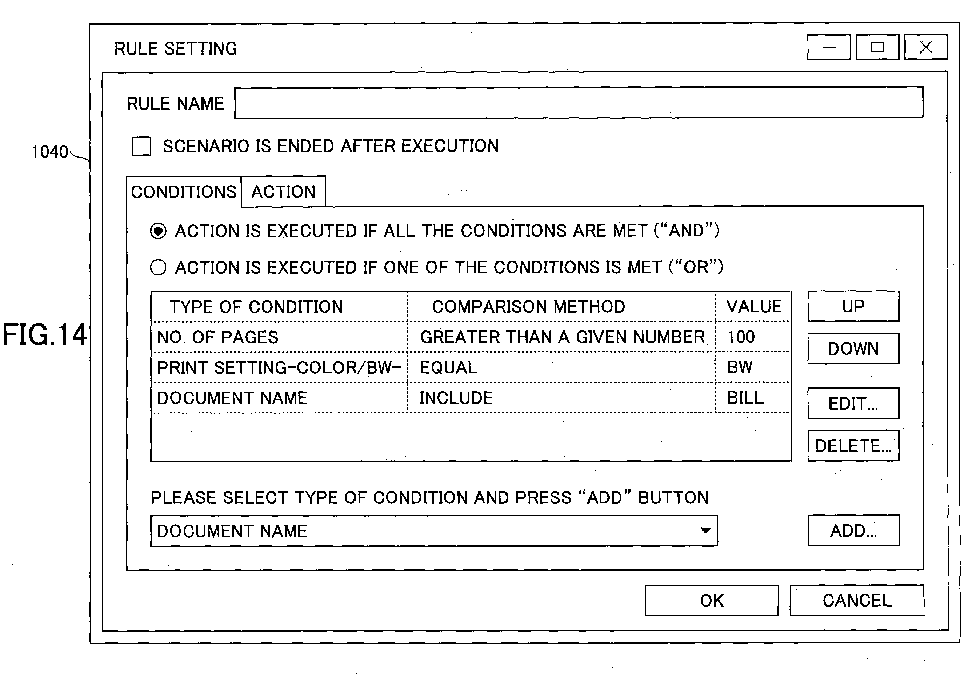

FIG. 14 is a diagram showing an image of a rule setting screen 1040. The rule setting screen 1040 shown in FIG. 14 includes a rule name, a check box which indicates the scenario is ended after execution of the rule, and one of a condition setting screen and an action setting screen, the displaying of which is selected by using tabs. A name of one of the rules included in the rule list of the scenario setting screen 1030 is displayed as the rule name in the rule setting screen 1040.

The check box is provided to indicate that, when two or more rules are included in a scenario, the scenario is to be ended after execution of the current rule without performing the following rule. Either the condition setting screen or the action setting screen may be displayed when the rule setting screen 1040 is first displayed.

The condition setting screen is provided to set up the conditions of rules. As shown in FIG. 14, the condition setting screen includes radio buttons to select the relationship between the conditions and the action, a list of the set-up conditions, a list of the types of condition, an up button, a down button, an edit button, a delete button, and an add button.

The radio buttons are provided to select either an option that the action is performed if any of the conditions are met, or an option that the action is performed if all the conditions are met. The list of the set-up conditions includes a type of conditions, a comparison method, and a value for each of the types of the conditions.

The types of condition may include "print setting", "document name", "keyword", "the number of pages", "date/time", etc. The comparison methods may include comparison methods for the conditions, such as partial agreement, full agreement, and greater than a given number. The value may vary depending on the type of condition and is provided as a comparison value of the condition.

The up button and the down button are provided to change the sequence of the condition selected from among the conditions included in the list of the set-up conditions of the condition setting screen. The edit button is provided to open the condition setting screen and edit the condition selected from among the conditions included in the list of the set-up conditions. The delete button is provided to delete the condition selected from among the conditions included in the list of the set-up conditions.

The list of the types of condition is provided to add condition types. In the list of the types of condition, available types of condition are displayed as the choices of condition types. The add button is provided to open the setting screen according to the type of condition selected from among the condition types included in the list of the types of condition. In a case of the unconditional rule, a message indicating that "if no conditions are added, the action is performed unconditionally" may be displayed in the list of the set-up conditions.

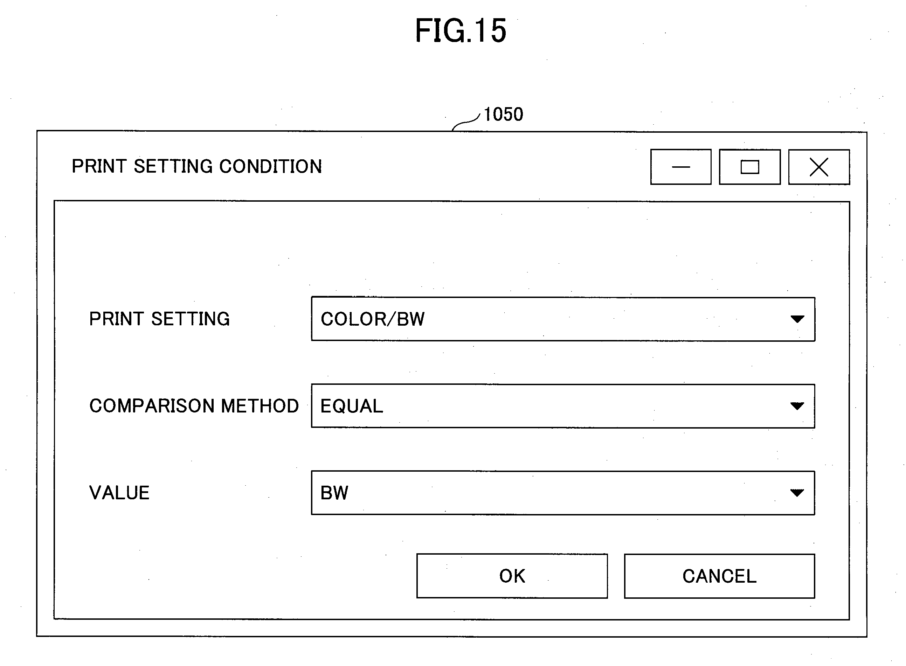

If the "print setting" is selected from the list of the types of condition and the add button is pressed, or if the condition whose type of conditions is the "print setting" is selected from the list of the set-up conditions and the edit button is pressed, the rule setting screen 1040 changes to a setting screen 1050 as shown in FIG. 15.

FIG. 15 is a diagram showing an image of a setting screen 1050 when the type of conditions selected is "print setting". The setting screen 1050 shown in FIG. 15 includes dropdown lists for selecting the print setting, the comparison method, and the value. Using the setting screen 1050 shown in FIG. 15 enables the administrator to set up the rules on the print setting conditions.

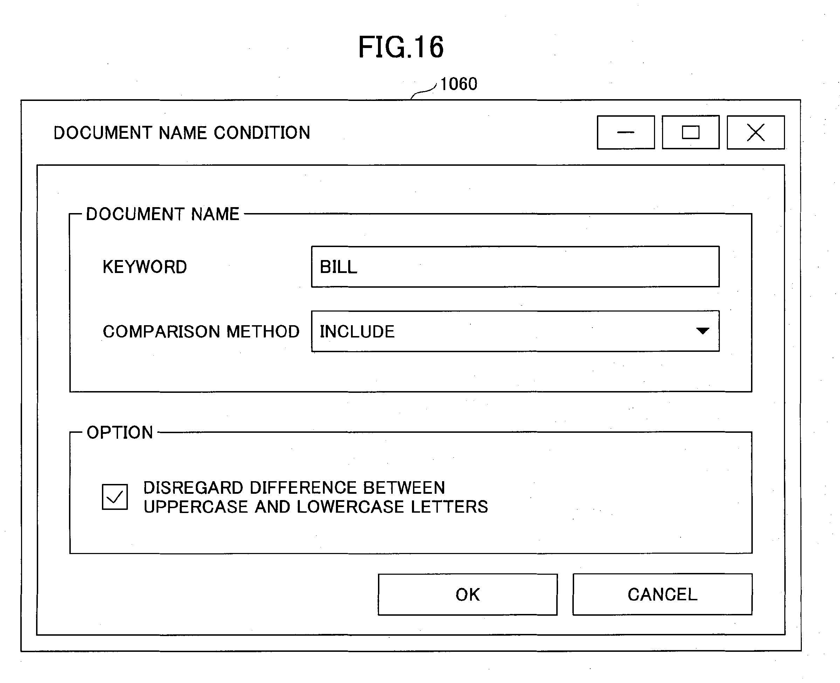

If the "document name" is selected from the list of the types of condition and the add button is pressed, or if the condition whose type of conditions is the "document name" is selected from the list of the set-up conditions and the edit button is pressed, the rule setting screen 1040 changes to a setting screen 1060 as shown in FIG. 16.

FIG. 16 is a diagram showing an image of a setting screen 1060 when the type of conditions selected is "document name". The setting screen 1060 shown in FIG. 16 includes a keyword input field, a dropdown list for selecting a comparison method, and a check box for setting up an option that "disregards the difference between uppercase and lowercase letters." A character string input to the keyword input field of the setting screen 1060 serves as the value displayed in the list of the set-up conditions of the rule setting screen 1040. The check box is provided to set up whether the difference between uppercase and lowercase letters is disregarded when a document name is compared with the character string input to the keyword input field by the selected comparison method.

For example, in the setting screen 1060 shown in FIG. 16, the condition of "if a character string "bill" is included in the document name" may be set up. In this manner, using the setting screen 1060 shown in FIG. 16 enables the administrator to set up the rules on the document name condition.

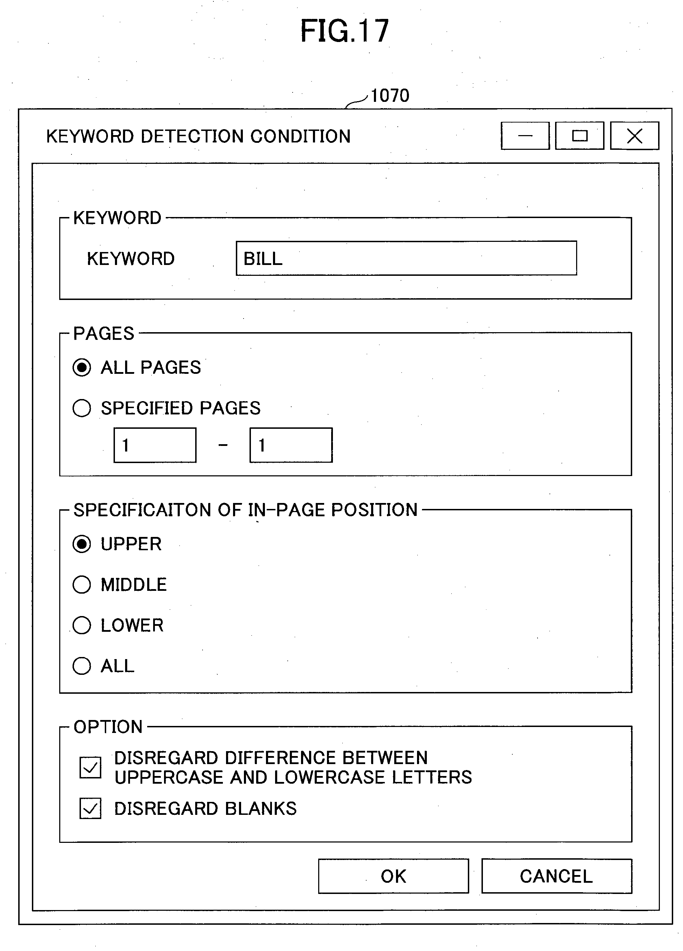

If the "keyword" is selected from the list of the types of condition and the add button is pressed, or if the condition whose type of condition is the "keyword" is selected from the list of the set-up conditions and the edit button is pressed, the rule setting screen 1040 changes to a setting screen 1070 as shown in FIG. 17.

FIG. 17 is a diagram showing an image of a setting screen 1070 when the type of condition selected is "keyword". The setting screen 1070 shown in FIG. 17 includes a keyword input field, a setting field for setting up the pages where a keyword is searched for, a setting field for setting up the in-page position where a keyword is searched for, and check boxes for setting up an option that disregards the difference between uppercase and lowercase letters and an option that disregards blanks.

A character string input to the keyword input field of the setting screen 1070 serves as the value displayed in the list of the set-up conditions of the rule setting screen 1040. For example, in the setting screen 1070 shown in FIG. 17, the condition of "if the upper portions of all the pages of the intermediate printing data are searched and a character string "bill" is included" is set up. In this manner, using the setting screen 1070 shown in FIG. 17 enables the administrator to set up the rules on the keyword condition.

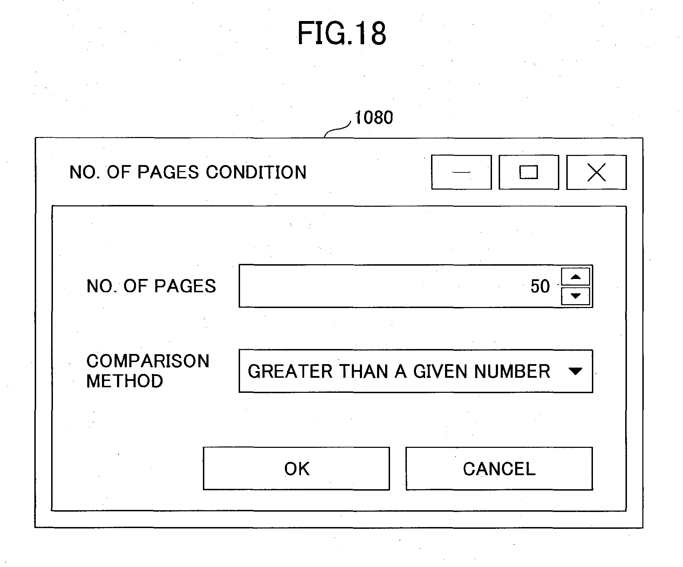

If "the number of pages" is selected from the list of the types of conditions and the add button is pressed, or if the condition whose type of condition is "the number of pages" is selected from the list of the set-up conditions and the edit button is pressed, the rule setting screen 1040 changes to a setting screen 1080 as shown in FIG. 18.

FIG. 18 is a diagram showing an image of a setting screen 1080 when the type of condition selected is "the number of pages". The setting screen 1080 shown in FIG. 18 includes an input field of the number of pages, and a dropdown list for selecting the comparison method. Using the setting screen 1080 shown in FIG. 18 enables the administrator to set up the rules on the number of pages condition. In the setting screen 1080 shown in FIG. 18, the condition of "if the number of pages of the intermediate printing data is greater than 50" is set up.

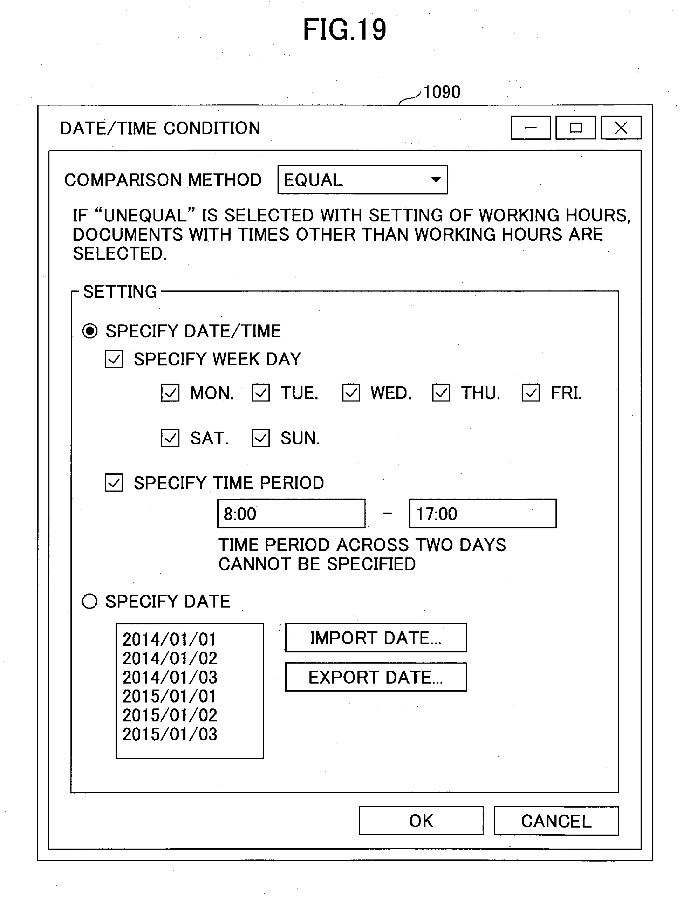

If the "date/time" is selected from the list of the types of conditions and the add button is pressed, or if the condition whose type of condition is the "date/time" is selected from the list of the set-up conditions and the edit button is pressed, the rule setting screen 1040 changes to a setting screen 1090 as shown in FIG. 19.

FIG. 19 is a diagram showing an image of a setting screen 1090 when the type of condition selected is "date/time". The setting screen 1090 shown in FIG. 19 includes a dropdown list for selecting the comparison method, and a setting field for specifying the date/time or the date. The setting screen 1090 shown in FIG. 19 is used to change the action, such as printing, according to the week day and time, or the date when printing is to be performed. An "import date" button and an "export date" button which are included in the setting field are provided to specify the date by reading the date from or writing the date to a file.

Using the setting screen 1090 shown in FIG. 19 enables the administrator to set up the rules on the date/time or date condition. In the setting screen 1090 shown in FIG. 19, the condition of "if it is within a time period between 8:00 and 17:00 on Monday to Sunday" is set up.

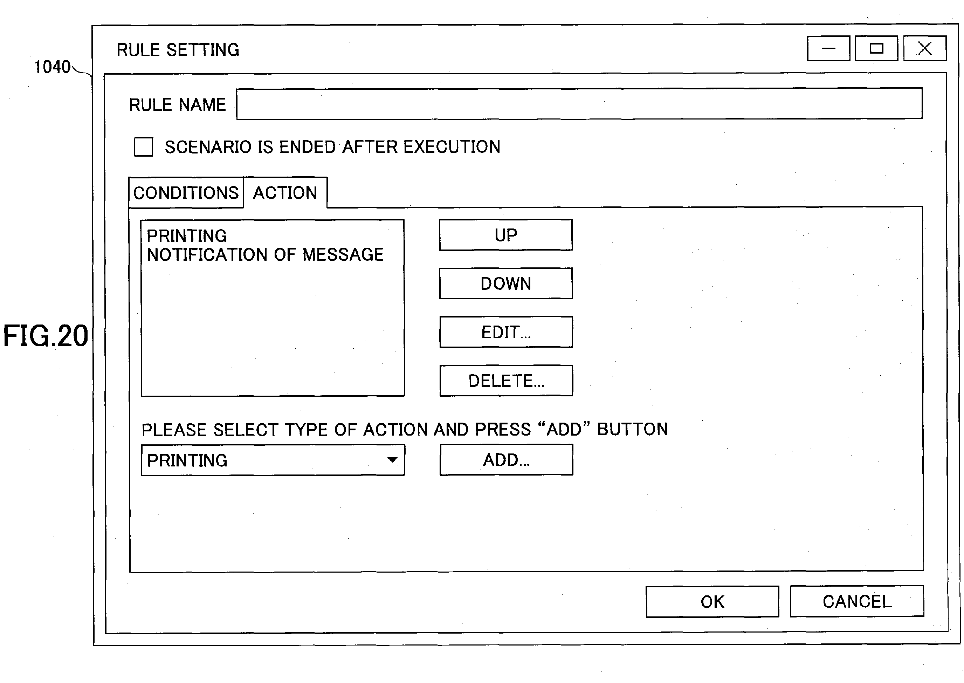

If the action setting screen is displayed in the rule setting screen 1040 shown in FIG. 14 by selecting the corresponding tab, the rule setting screen 1040 shown in FIG. 14 changes to another rule setting screen 1040 as shown in FIG. 20.

FIG. 20 is a diagram showing an image of another rule setting screen 1040. The action setting screen of the rule setting screen 1040 shown in FIG. 20 is provided to set up an action to be performed when the conditions set up in the condition setting screen shown in FIG. 14 are met. The rule setting screen 1040 shown in FIG. 20 includes a list of actions, a dropdown list of the types of action, an up button, a down button, an edit button, a delete button, and an add button.

One or more actions are displayed in the list of actions. The up button and the down button are provided to change the sequence of an action selected from among the actions included in the list of actions. The actions are performed sequentially in the order displayed in the list of actions.

The edit button is provided to open the action setting screen to edit the action selected from among the actions included in the list of actions. The delete button is provided to delete the action selected from among the actions included in the list of actions. The dropdown list of the types of action is provided to add action types. In the dropdown list of the types of action, available types of action are displayed as the choices of action types.

The add button is provided to open the setting screen according to the type of action selected from among the types of action included in the dropdown list of the types of action. The types of action may include "printing", "change of print setting", "notification of a message", "document registration for the document management device", etc.

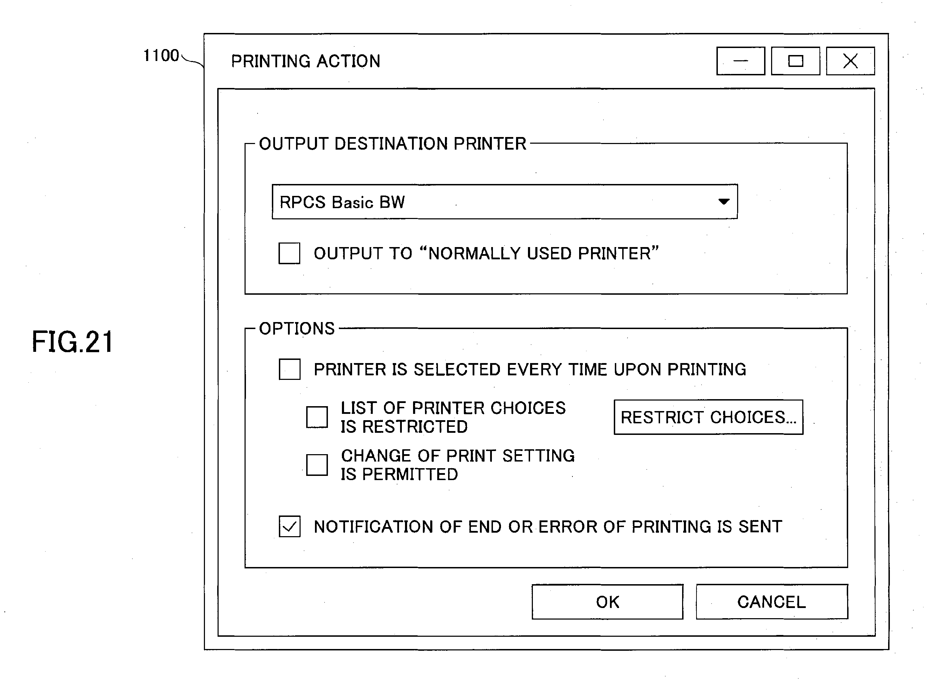

If the "printing" is selected from the list of the action types and the add button is pressed, or if the "printing" is selected from the list of actions and the edit button is pressed, the rule setting screen 1040 changes to a setting screen 1100 as shown in FIG. 21.

FIG. 21 is a diagram showing an image of a setting screen 1100 when the type of action selected is "printing." The setting screen 1100 shown in FIG. 21 includes an output destination printer selection field and an option selection field. The output destination printer selection field is provided to select an output destination printer at the time of rule execution. The option selection field includes a check box for an option that a printer is selected every time upon printing, a check box for an option that the choices of printers are restricted, a check box for an option that change of print setting is permitted, and a check box for an option that a notification of an end/error of printing is sent. Moreover, the option selection field includes a "RESTRICT CHOICES" button.

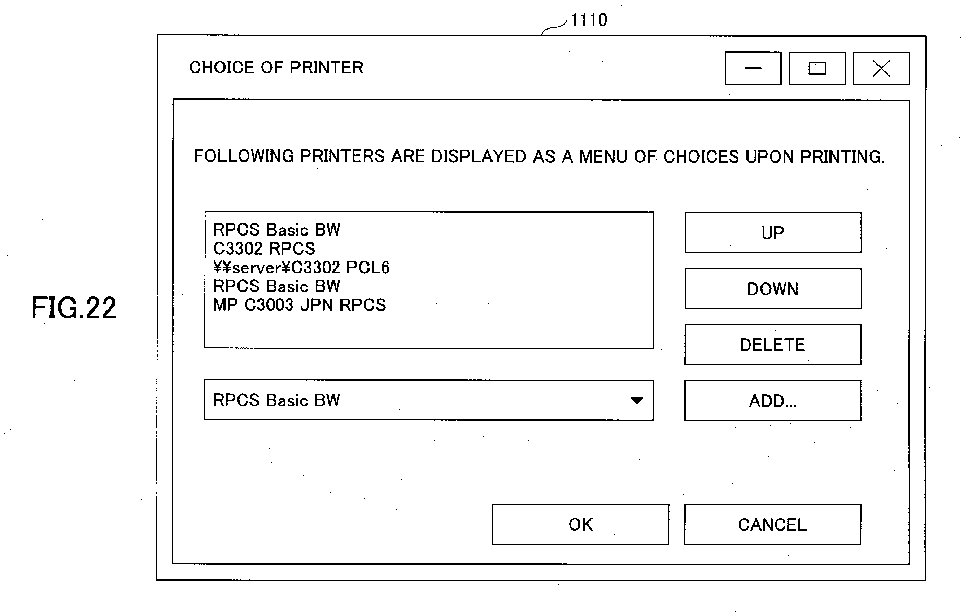

If the "RESTRICT CHOICES" button is pressed, the setting screen 1100 shown in FIG. 21 changes to a setting screen 1110 shown in FIG. 22, in which the choices of printers are set up.

FIG. 22 is a diagram showing an image of a setting screen 1110 in which the choices of printers are set up. When the check box for the option that the choices of printers are restricted is checked in the setting screen 1100, using the setting screen 1110 shown in FIG. 22 enables the administrator to set up the choices of printers which are selectable.

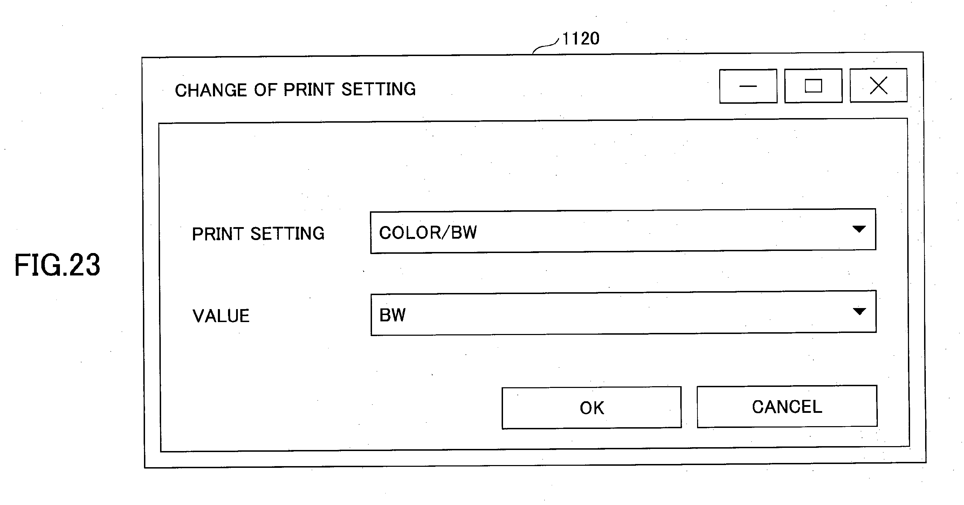

If the "change of print setting" is selected from the list of the types of action of the rule setting screen 1040 shown in FIG. 20 and the add button is pressed, or if the "change of print setting" is selected from the list of actions and the edit button is pressed, the rule setting screen 1040 changes to a setting screen 1120 as shown in FIG. 23.

FIG. 23 is a diagram showing an image of a setting screen 1120 when the type of action selected is "change of print setting." The setting screen 1120 shown in FIG. 23 includes a dropdown list for selecting a print setting and a dropdown list for selecting a value. The print setting dropdown list is provided to select a changed print setting. The value dropdown list is provided to select a changed value of the print setting. The value dropdown list may vary depending on the selected print setting.

Using the setting screen 1120 shown in FIG. 23 enables the administrator to set up the action of the change of print setting. In the setting screen 1120 shown in FIG. 23, the value of the print setting "COLOR/BW" is changed to BW (black and white). For example, if a printing action is placed after the above-described action of the change of print setting, the administrator may set up compulsory black-and-white printing.

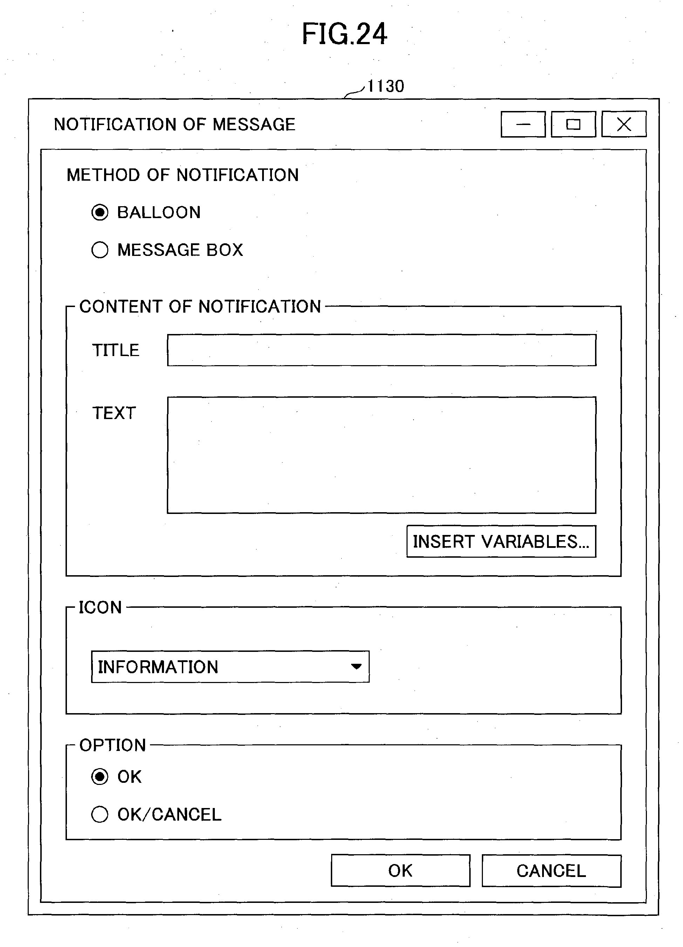

If the "notification of a message" is selected from the list of the types of action of the rule setting screen 1040 shown in FIG. 20 and the add button is pressed, or if the "notification of a message" is selected from the list of actions and the edit button is pressed, the rule setting screen 1040 changes to a setting screen 1130 as shown in FIG. 24.

FIG. 24 is a diagram showing an image of a setting screen 1130 when the type of action selected is "notification of a message." The setting screen 1130 shown in FIG. 24 includes radio buttons to select the method of notification, a setting field to set up the contents of notification, a dropdown list to select the icon, and radio buttons to select the button type.

The radio buttons to select the method of notification are provided to select a balloon or a message box as the method of notification. The setting field to set up the contents of notification is provided to set up a title and text of the notification. Moreover, this setting field includes an "INSERT VARIABLES" button. The "INSERT VARIABLES" button is provided to display a dialog in which a document name, a printer name, a print setting, etc., may be selected as variables. The variables selected in this dialog may be inserted to the position of the cursor in the text.

The dropdown list to select the icon is provided to select an icon which is displayed in a balloon or a message box. The radio buttons to select the button type are provided to select an OK type message box or an OK/CANCEL type message box. Using the setting screen 1130 shown in FIG. 24 enables the administrator to set up the action of notification of a message.

If the "document registration for the document management device" is selected from the list of the types of action of the rule setting screen 1040 shown in FIG. 20 and the add button is pressed, the rule setting screen 1040 changes to a document management device setting screen which is similar to the document management device setting screen 1010 shown in FIG. 11. Similarly, if the "document registration for the document management device" is selected from the list of actions of the rule setting screen 1040 shown in FIG. 20 and the edit button is pressed, the rule setting screen 1040 changes to a document management device setting screen which is similar to the document management device setting screen 1010 shown in FIG. 11. In this manner, the administrator is enabled to set up the action of document registration for the document management device 13.

Moreover, according to this embodiment, a consistency check other than the checks performed in the setting screens of individual conditions or individual actions may be additionally performed as a rule. For example, if the action of the change of print setting has been performed with the setting screen 1120 and the check box for the option that "change of print setting is permitted" in the printing action screen 1100 is ON, it is determined by the consistency check that an error has taken place. This consistency check is performed as a rule to prevent the inconsistency that the change of print setting is permitted after the changed print setting has been selected according to the rule. In this manner, according to this embodiment, the consistency check may be performed as a rule and the inconsistent status may be prevented from taking place.

Next, a description will be given of a printing process performed by the printing system 1 according to this embodiment.

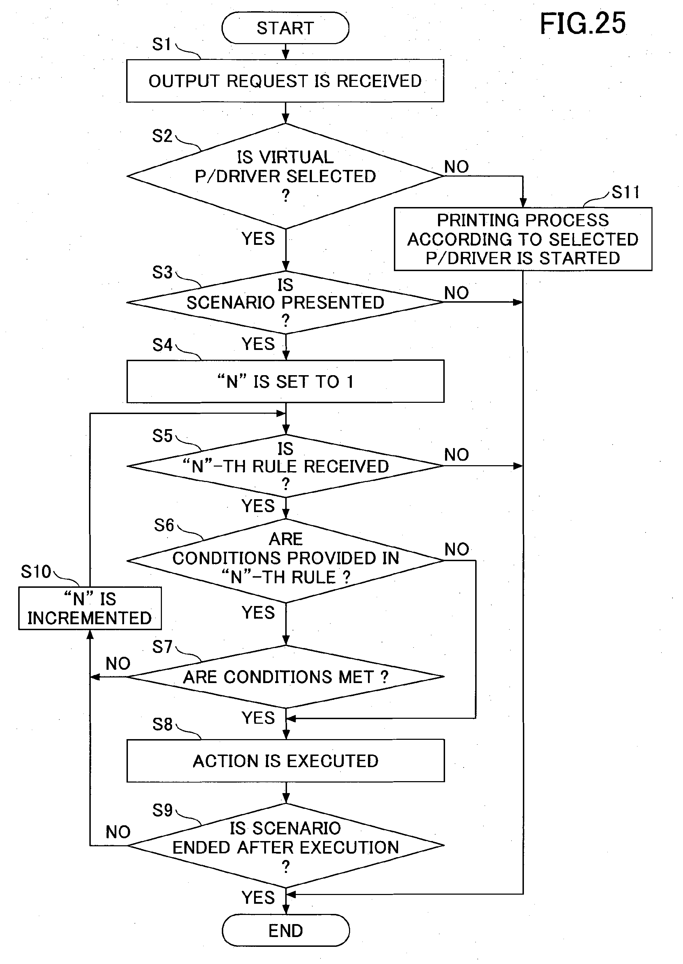

In the printing system 1, the client terminal 16 in which the software package 50 according to this embodiment is already installed starts performing a printing process as shown in FIG. 25.

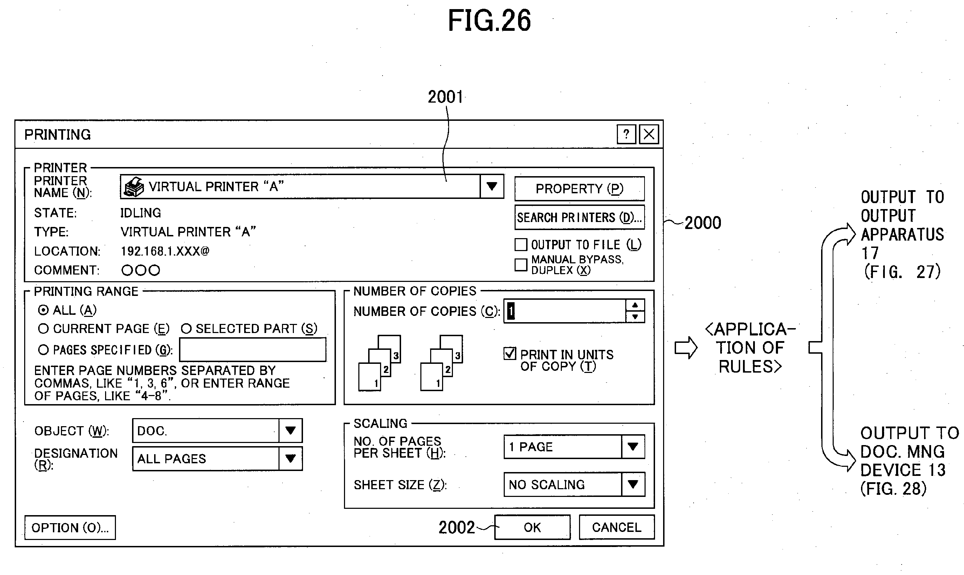

FIG. 25 is a flowchart for explaining a printing process performed by the printing system 1. In step S1, the document preparation application 21 of the client terminal 16 receives an output request from a user. In step S2, the document preparation application 21 detects whether the virtual printer driver 22a is selected in a printer selection field 2001 of a print setting screen 2000 which will be described later with reference to FIG. 26. When a printer driver other than the virtual printer driver 22a is selected (NO in step S2), the document preparation application 21 progresses to step S11, and sends a printing event to the printer driver selected by the user, such as the virtual printer driver 22. Hence, the user is able to start performing a printing process (such as a pull-print process) according to the selected printer driver in step S11.

On the other hand, when the virtual printer driver 22a is selected (YES in step S2), the document preparation application 21 sends a printing event to the virtual printer driver 22a. The virtual printer driver 22a sends the printing event to the rule-based printing control unit 71 of the output control plug-in 64. Moreover, the virtual printer driver 22a transforms the application data into intermediate printing data.

In step S3, the rule-based printing control unit 71 determines whether the set-up scenario exists. When there is no set-up scenario (NO in step S3), the rule-based printing control unit 71 terminates the printing process shown in FIG. 25.

On the other hand, when the set-up scenario exists (YES in step S3), the process progresses to step S4. In step S4, the rule-based printing control unit 71 sets the variable N to 1 (N = 1). In step S5, the rule-based printing control unit 71 determines whether the N-th rule is received.

When the N-th rule is not received (NO in step S5), the rule-based printing control unit 71 terminates the printing process shown in FIG. 25. When the N-th rule is received (YES in step S5), the rule-based printing control unit 71 determines in step S6 whether the conditions are provided in the N-th rule.

When the conditions are provided in the N-th rule (YES in step S6), the rule-based printing control unit 71 determines in step S7 whether the conditions are met. When the conditions are met (YES in step S7), the rule-based printing control unit 71 progresses to step S8 and executes the action in step S8. When the conditions are not met (NO in step S7), the rule-based printing control unit 71 progresses to step S10. In step S10, the rule-based printing control unit 71 increments the variable N (N = N + 1), and thereafter returns back to step S5.

When it is determined in step S6 that the conditions are not provided in the N-th rule, the rule-based printing control unit 71 progresses to step S8 and executes the action in step S8. Subsequently, the rule-based printing control unit 71 progresses to step S9.

In step S9, the rule-based printing control unit 71 determines whether the scenario is set to be ended after execution of the N-th rule without performing the following rule.

When the scenario is set to be ended after execution of the N-th rule without performing the following rule (YES in step S9), the rule-based printing control unit 71 terminates the printing process shown in FIG. 25. When the scenario is not set to be ended after execution of the N-th rule without performing the following rule (NO in step S9), the rule-based printing control unit 71 progresses to step S10, and increments the variable N (N = N + 1) in step S10. Thereafter, the rule-based printing control unit 71 returns back to step S5.

Incidentally, when there is no set-up scenario in step S3, a notification of such a condition may be sent to or displayed for the user.

For example, in a case where the rule with which no conditions are associated, namely the action of change of print setting (COLOR -> BW) or the action of change of print setting (to the printer A), is selected, the rule-based printing control unit 71 progresses to step S8 because no conditions are associated with the rule, and these actions defined by the rule are performed in step S8. This rule is an example of compulsory black-and-white printing.

In a case of a scenario in which a first rule is associated with a condition and with the setting that the scenario is to be ended after execution of the first rule without performing the following rule, and a second rule is associated with no condition, the scenario may distribute outputting jobs into a first action to be performed only when the condition is met and a second, different action to be performed.

For example, it is assumed that the first rule is defined with the condition (the number of pages is greater than 50) and with a printing action (to the printer A), and the second rule is defined with no condition and with a printing action (to the printer B).

In this case, the first rule in which the condition (the number of pages is greater than 50) and the printing action (to the printer A) are defined is received in step S5 of the printing process shown in FIG. 25. When the condition (the number of pages is greater than 50) is met, the rule-based printing control unit 71 performs the printing action (to the printer A) defined in the first rule in step S8. Subsequently, in step S9, the rule-based printing control unit 71 terminates the printing process shown in FIG. 25 because the scenario is set to be ended after execution of the first rule without performing the following rule.

When the condition (the number of pages is greater than 50) is not met, the rule-based printing control unit 71 returns back to step S5, and receives the second rule in which the printing action (by the printer B) is defined with no condition. Because no condition is associated with the second rule, the rule-based printing control unit 71 performs the printing action (by the printer B) defined in the second rule in step S8.

In a case of a scenario in which two or more rules are associated with different conditions and with the setting that the scenario is to be ended after execution of the corresponding rule without performing the following rule, the scenario may distribute outputting jobs into different actions according to the different conditions.

For example, it is assumed that the rules are defined with the conditions of different keywords and with printing actions by different printers. In this case, the rule-based printing control unit 71 may distribute printing jobs to different printing destinations according to the text of documents. In the conditions, the keywords and the date/time may be incorporated. In this case, in accordance with the priority levels of the rules, printing jobs may be distributed to a printer Y at a printing destination when the time is within a period of working hours, and may be distributed to different printing places according to the text of documents when the time is not within the period of working hours.

FIGS. 26 to 28 are diagrams showing a screen transition of the printing system 1 according to this embodiment. For example, a user may operate the document preparation application 21 to open a print setting screen 2000 shown in FIG. 26, and may start performing a printing process by selecting the virtual printer driver 22a from a printer selection field 2001 of the print setting screen 2000. Moreover, a user may select from the printer selection field 2001 of the print setting screen 2000 the real printer driver 23 which causes the local output apparatus 15 to perform a printing process.

Besides the virtual printer driver 22a according to this embodiment, the user may also select the virtual printer driver 22 from the print setting screen 2000 shown in FIG. 26, and the virtual printer driver 22 uses the plug-in 31 different from the document registration plug-in 61 and the output control plug-in 64. If the virtual printer driver 22 is selected and a printing process is requested, the user may start performing the printing process according to the selected virtual printer driver 22. The user may request a printing process by pressing an "OK" button 2002 of the print setting screen 2000.

If a user selects the virtual printer driver 22a and requests a printing process, the document preparation application 21 of the client terminal 16 sends a printing event from the user to the virtual printer driver 22a. The virtual printer driver 22a sends the printing event to the output control plug-in 64. Moreover, the virtual printer driver 22a transforms the application data into intermediate printing data.

As shown in FIG. 26, when the above-described rules are applied, the output control plug-in 64 performs either an action process of outputting printing data to the output apparatus 17, or an action process of outputting printing data to the document management device "A" 13.

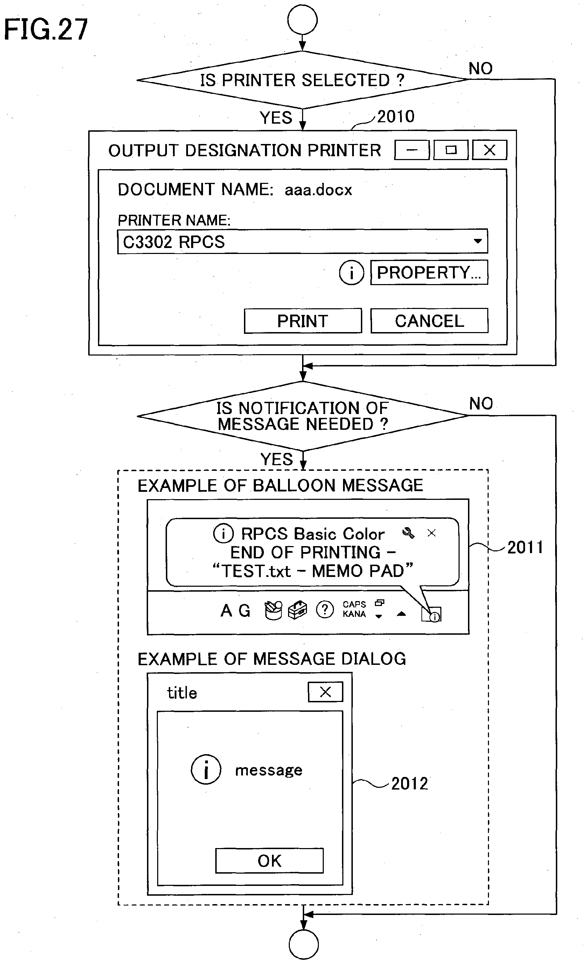

In a case where the action process of outputting the printing data to the output apparatus 17 is performed, if the user is prompted to select a desired printer at an output destination, the output control plug-in 64 displays a printer selection screen 2010 shown in FIG. 27, in which the user is prompted to select a printer. If the user is not prompted to select a desired printer at an output destination, the output control plug-in 64 does not display the printer selection screen 2010. If a notification of a message is sent to the user, the output control plug-in 64 sends the notification of the message using a balloon 2011 or a message box 2012 shown in FIG. 27.

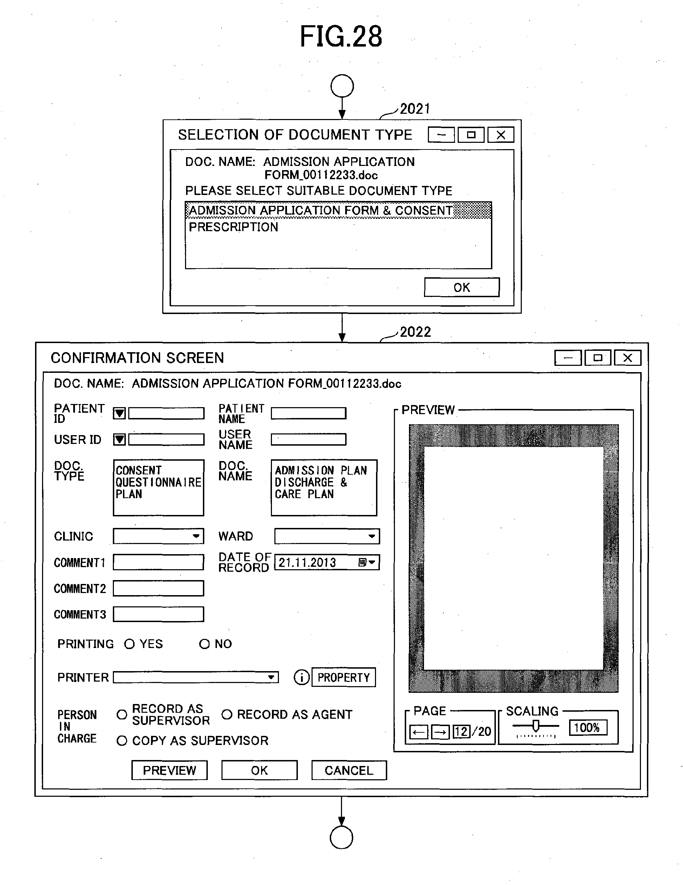

In a case where the action process of outputting the printing data to the document management device "A" 13 is performed, the output control plug-in 64 sends an execution request of the action process of outputting the printing data to the document management device "A" 13 to the document registration plug-in "A" 61. The document registration plug-in "A" 61 displays a document type selection dialog 2021 shown in FIG. 28, in which the user is prompted to select a document type. Thereafter, the document registration plug-in "A" 61 searches for a document to be printed according to the selected document type. Based on the search results, the document registration plug-in "A" 61 generates bibliographic information of the document and displays a confirmation screen 2022 reflecting the content of the document. The user may perform confirmation, revision and addition of the bibliographic information retrieved from the document to be printed, by using the confirmation screen 2022.

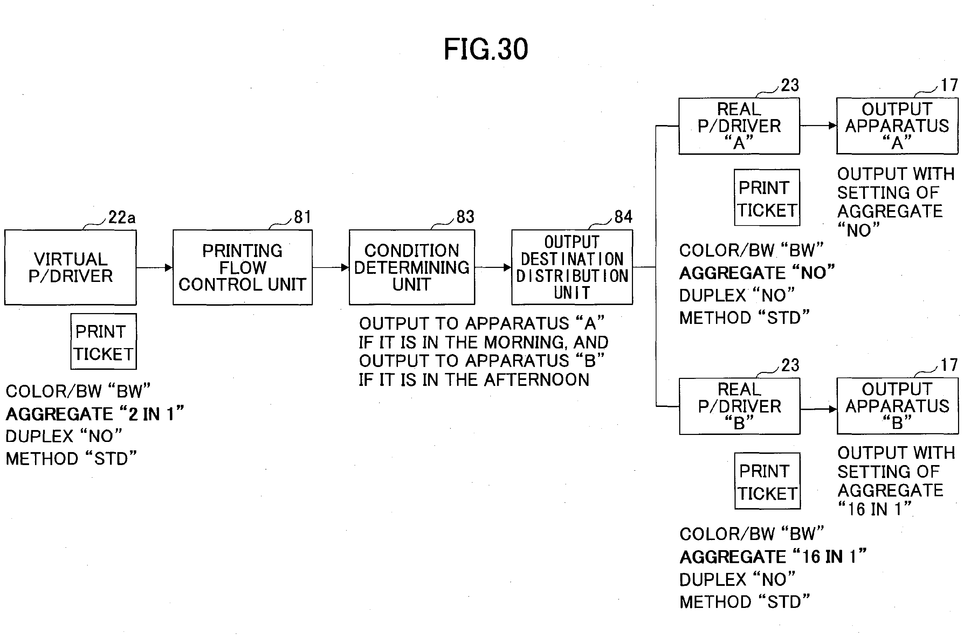

Based on the setting of the printing mode received in the environment setting screen 1000 shown in FIG. 9, the output control plug-in 64 performs an output destination distribution process as shown in FIG. 29 or FIG. 30.

FIG. 29 is a diagram for explaining an output destination distribution process performed when a higher priority is given to the print setting of the virtual printer driver than to that of the real printer driver.

In this case, the virtual printer driver 22a sends a printing ticket, including the value of the print setting set up by the user, and the intermediate printing data generated from the application data to the rule-based printing control unit 71 of the output control plug-in 64. Specifically, in the example of FIG. 29, the print setting of the virtual printer driver 22a is expressed as follows: COLOR/BW (black and white) "BW"; AGGREGATE PRINT "2 in 1"; DUPLEX "NO"; and PRINTING METHOD "STD (standard printing)."

The printing flow control unit 81 of the rule-based printing control unit 71 requests the condition determining unit 83 to determine the conditions for output destination distribution. The condition determining unit 83 takes into consideration a rule of "outputting to the output apparatus "A" if it is in the morning" and a rule of "outputting to the output apparatus "B" if it is in the afternoon", and selects one of an action of "outputting to the output apparatus "A"" and an action of "outputting to the output apparatus "B"" depending on which of the two conditions: the morning and the afternoon is met.

When the action of "outputting to the output apparatus "A"" is selected (or when the condition that it is in the morning is met), the output destination distribution unit 84 selects the real printer driver "A" 23 of the output apparatus "A" 17 as an output destination of the printing job. The output destination distribution unit 84 makes reference to the set-up printing mode and determines that the "priority is given to print setting of virtual printer driver" is selected as the printing mode.

The output destination distribution unit 84 gives a higher priority to the value of the print setting of the virtual printer driver 22a than to the value of the print setting of the real printer driver "A" 23. Hence, in the case of FIG. 29, the aggregate print of the print setting is set to "2 in 1."

When the action of "outputting to the output apparatus "B"" is selected (or when the condition that it is in the afternoon is met), the output destination distribution unit 84 selects the real printer driver "B" 23 of the output apparatus "B" 17 as an output destination of the printing job. The output destination distribution unit 84 makes reference to the set-up printing mode and determines that the "priority is given to print setting of virtual printer driver" is selected by the user as the printing mode.

The output destination distribution unit 84 gives a higher priority to the value of the print setting of the virtual printer driver 22a than to the value of the print setting of the real printer driver "B" 23. Hence, in the case of FIG. 29, the aggregate print of the print setting is set to "2 in 1."

FIG. 30 is a diagram for explaining an output destination distribution process performed when a higher priority is given to the print setting of the real printer driver than to the print setting of the virtual printer driver. Procedures of the virtual printer driver 22a, the printing flow control unit 81, and the condition determining unit 83 in FIG. 30 are the same as those described above with reference to FIG. 29, and a description thereof will be omitted.

In this case, when the action of "outputting to the output apparatus "A"" is selected (or when the condition that it is in the morning is met), the output destination distribution unit 84 selects the real printer driver "A" 23 of the output apparatus "A" 17 as an output destination of the printing job. The output destination distribution unit 84 makes reference to the set-up printing mode and determines that the "priority is given to print setting of real printer driver" is selected by the user as the printing mode.

The output destination distribution unit 84 gives a higher priority to the value of the print setting of the real printer driver A23 than to the value of the print setting of the virtual printer driver 22a. Hence, in the case of FIG. 30, the aggregate print of the print setting is set to "NO."

When the action of "outputting to the output apparatus "B"" is selected (or when the condition that it is in the afternoon is met), the output destination distribution unit 84 selects the real printer driver "B" 23 of the output apparatus "B" 17 as an output destination of the printing job. The output destination distribution unit 84 makes reference to the set-up printing mode and determines that the "priority is given to print setting of real printer driver" is selected by the user as the printing mode.

The output destination distribution unit 84 gives a higher priority to the value of the print setting of the real printer driver "B" 23 than to the value of the print setting of the virtual printer driver 22a. Hence, in the case of FIG. 30, the aggregate print of the print setting is set to "16 in 1."

When the rule of the action "change of print setting" is applied, a higher priority is given to the changed value of the print setting by the action "change of print setting" even if the printing mode of "giving priority to print setting of real printer driver" is selected. Namely, when the rule of the action "change of print setting" which specifies a changed value of the print setting item and is associated with no condition is selected, the output control plug-in 64 determines a higher priority of the value of the output setting item specified by the rule over the value of the first output setting item and the value of the third output setting item.

When the rule of the action "change of print setting" is applied, the output control plug-in 64 holds the changed value of the print setting by the action "change of print setting." The output destination distribution unit 84 incorporates the changed value of the print setting by the action "change of print setting" before distributing the printing job to the real printer driver 23.

For example, before distributing the printing job to the real printer driver 23, the output destination distribution unit 84 tries to acquire the changed value of the print setting by the action "change of print setting", and reflects the acquired value on the printing job when the changed value of the print setting by the action "change of print setting" is acquired successfully.

It is not necessarily required that the print setting items of the virtual printer driver 22a are consistent with the print setting items of the real printer driver 23. In any printing mode, if a print setting item, included in the real printer driver 23, is not included in the virtual printer driver 22a, a value of the print setting item of the real printer driver 23 becomes valid.

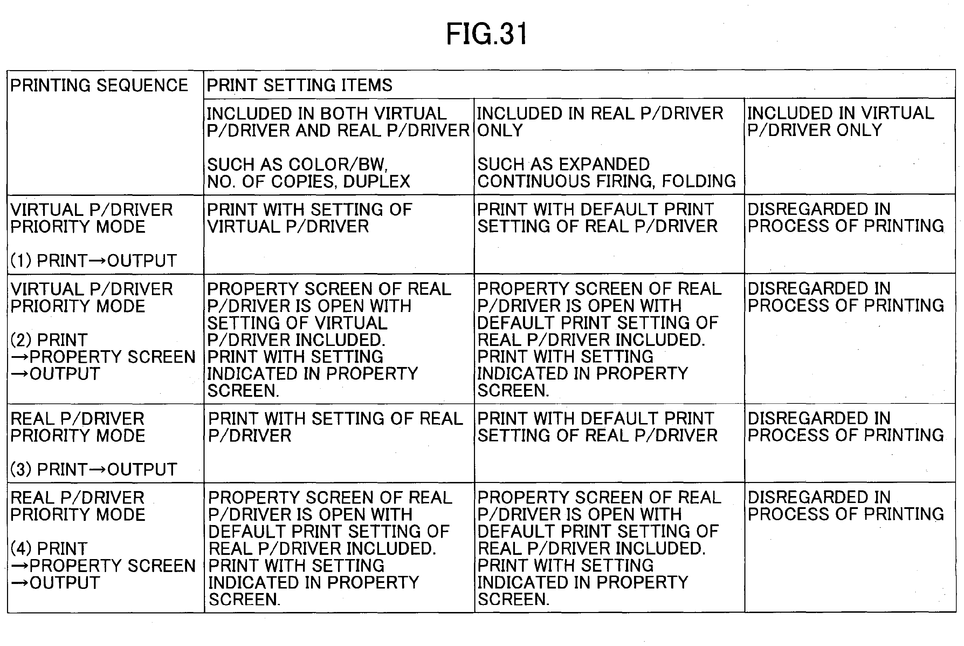

FIG. 31 is a diagram for explaining the handling of print setting values in various printing modes. As shown in FIG. 31, the print setting items included in the virtual printer driver 22a only are disregarded during a printing process. If the print setting items are included in the real printer driver 23 only and not included in the virtual printer driver 22a, the values of the print setting items of the real printer driver 23 become valid. If the print setting items are included in both the virtual printer driver 22a and the real printer driver 23, the values of the print setting items which become valid differ in accordance with the printing mode.

As described in the foregoing, the printing mode in which a higher priority is given to the value of the print setting of the real printer driver 23 may be used by the printing system 1 according to the embodiment, and a printing job may be performed according to the value of the print setting item of the real printer driver 23 which is not included in the virtual printer driver 22a. For example, if the print setting "aggregate print" of the virtual printer driver 22a does not include the value "16 in 1" but the print setting "aggregate print" of the real printer driver 23 includes the value "16 in 1", the user may perform a printing job using the value "16 in 1" of the print setting "aggregate print" of the real printer driver 23. Thus, the printing system 1 according to this embodiment may perform a printing job by drawing the best out of the print setting items of the real printer driver 23, irrespective of the value of the print setting of the virtual printer driver 22a. system according to the present invention can perform an outputting process by giving a higher priority to values of third output setting items dependent of an output apparatus than to values of first output setting items independent of the output apparatus.

The output system according to the present invention is not limited to the above-described embodiments and various variations and modifications may be made without departing from the scope of the present invention, which is defined by the appended claims. For example, the printing system 1 according to the embodiment may further include other apparatuses, such as an authentication server apparatus and a print server apparatus.

The printing system 1 according to the embodiment in which the client terminal 16 and the output apparatus 17 are connected together via the network N1 is an example of an output system which is adapted to print, display and transmit output data, such as printing data, image data, displaying data, application data, and other machine-readable data.

The virtual printer driver 22a which transforms application data into intermediate printing data independent of output apparatuses and outputs the intermediate printing data is an example of a first output data generation unit that generates, upon receipt of an output request of target output data, first output data based on the target output data, the first output data having a value of a first output setting item set up by a user when inputting the output request.

The real printer driver 23 which transforms the intermediate printing data into the real printing data in the format which can be printed by the output apparatus 17 and outputs the real printing data is an example of a second output data generation unit that generates second output data based on the first output data, the second output data having a value of a second output setting item when outputting to the output apparatuses, and outputs the second output data to the output apparatuses.

The output control plug-in 64 having the function of performing the rule-based printing process is an example of an output control unit that determines the value of the second output setting item based on priority information which defines a higher priority between the value of the first output setting item and a value of a third output setting item which is set up for the output apparatuses in the second output data generation unit.

The condition determining unit 83 which determines the conditions for output destination distribution, such as date/time, printing pages, etc., is an example of a condition determination unit to determine conditions for distributing the second output data to output destinations. The output destination distribution unit 84 which distributes the printing jobs to the output apparatuses 15 and 17 is an example of an output destination distribution unit to distribute the second output data to the output destinations based on the conditions determined by the condition determination unit.

The client terminal 16 which is used by a user is an example of a terminal apparatus, such as a smart phone, a mobile phone or a PC. The output apparatus 17 which prints the real printing data is an example of an image forming apparatus, such as a printer, a copier, a multifunction peripheral or a laser printer, a projection device or an display device to perform display outputting, such as a projector or a monitor, and a speech output apparatus to output speech data, such as audio data.

The output control plug-in 64 according to the embodiment is configured to select one of the output to the output apparatus 17 (printing output) and the output to the document management device "A" 13 (storage output) by the rule-based printing process based on the rules (conditions and actions).

It may be understood that the output control plug-in 64 according to the embodiment performs an outputting process by selecting either printing data or storage data as output data by the rule-based printing process. Moreover, it may be understood that the output control plug-in 64 according to the embodiment performs an outputting process by selecting either the output apparatus 17 or the document management device "A" 13 as an output destination of output data by the rule-based printing process.

Thus, it may be understood that the output control plug-in 64 according to the embodiment outputs the output data selected according to the use, such as printing or storage, by the rule-based printing process to one of the output apparatus 17 and the document management device "A" 13 selected according to the use by the rule-based printing process.

The present application is based on and claims the benefit of priority of Japanese Patent Application No. 2014-099327, filed on May 13, 2014.

### DESCRIPTION OF REFERENCE NUMERALS

- 1:: printing system
- 11:: administrator terminal
- 12:: application server device
- 13:: document management device "A"
- 15, 17:: output apparatus
- 16:: client terminal
- 21:: document preparation application
- 22, 22a:: virtual printer driver
- 23:: real printer driver
- 24:: plug-in
- 25:: platform API
- 26:: platform
- 27:: storage unit
- 31:: plug-in
- 41:: display control (UI control) unit
- 42:: setting unit
- 43:: communication unit
- 50:: software package
- 51:: functional plug-ins
- 52:: main body
- 61-63:: document registration plug-ins "A"-"C"
- 64:: output control plug-in
- 71:: rule-based printing control unit
- 72:: document registration execution request unit
- 73:: display control unit
- 81:: printing flow control unit
- 82:: printing mode selection unit
- 83:: condition determining unit
- 84:: output destination distribution unit
- 85:: setting unit
- 86:: setting information holding unit
- 91:: document registration execution request reception unit
- 92:: document registration execution control unit
- 93:: setting unit
- 94:: setting information holding unit
- 500:: computer
- 501:: input device
- 502:: display device
- 503:: external interface
- 503a:: recording medium
- 504:: RAM
- 505:: ROM
- 506:: CPU
- 507:: communication interface
- 508:: HDD
- B:: bus
- N1:: network

### RELATED ART DOCUMENT

Patent Document 1: Japanese Laid-Open Patent Publication No. 2013-008353.

## Claims

1. An output system (1) in which a terminal apparatus (16) and one or more output apparatuses (17) are connected via a network (N1), comprising:
a first output data generation unit (22a) that generates, upon receipt of an output request of target output data, first output data based on the target output data, the first output data having a value of a first output setting item set up by a user when inputting the output request;
a second output data generation unit (23) that generates second output data based on the first output data, the second output data having a value of a second output setting item when outputting to an output apparatus (17), and outputs the second output data to the output apparatus (17);
an output control unit (64) that determines the value of the second output setting item based on priority information which defines a higher priority between the value of the first output setting item and a value of a third output setting item which is set up for the output apparatus (17) in the second output data generation unit (23); and a setting information holding unit (86) that stores a rule for controlling the outputting of the second output data,
wherein the output control unit (64) gives a higher priority to the value of the third output setting item than to the value of the first output setting item, as the value of the second output setting item, when the third output setting item has priority over the first output setting item according to the priority information, and gives a higher priority to the value of the first output setting item than to the value of the third output setting item, as the value of the second output setting item, when the first output setting item has priority over the third output setting item according to the priority information;
**characterized in that**
the output control unit (64) determines one of the output apparatuses (17) as an output destination based on the rule, determines the value of the second output setting item by determining a higher priority between the value of the first output setting item and the value of the third output setting item which is set up for the one of the output apparatuses (17) in the second output data generation unit (23), and causes the second output data generation unit (64) to output the second output data,
if the first output setting item of the first output data is included only in the first output data generation unit (22a) and not in the second output data generation unit (23), said first output setting item is discarded during an outputting process,
if the third output setting item is included only in the second output data generation unit (23) and not in the first output data generation unit (22a), the value of said third output setting item in the second output data generation unit (23) becomes the value of the second output setting item, and
if a fourth output setting item is included in both the first output data generation unit (22a) and the second output data generation unit (23), the value of the fourth output setting item is set based on the priority information.

2. The output system (1) according to claim 1, wherein, when the output destination is an information processing apparatus in which the second output data is registered, the output control unit sends a request of registration of the second output data in the information processing apparatus to an output data registration unit, and the output data registration unit registers the second output data in the information processing apparatus in response to receiving the request.

3. The output system (1) according to claim 1, wherein the rule specifies a value of an output setting item associated with a condition depending on whether the condition is met, and, when the rule is applied, the output control unit (64) determines a higher priority of the value of the output setting item specified by the rule over the value of the first output setting item and the value of the third output setting item.

4. The output system (1) according to any of claims 1 to 3, wherein the first output data generation unit (22a) is a virtual device driver and the second output data generation unit (23) is a real device driver.

5. The output system (1) according to claim 4, wherein the first output data generation unit (22a) is a virtual printer driver and the second output data generation unit (23) is a real printer driver.

6. An output method performed by an output system (1) in which a terminal apparatus (16) and one or more output apparatuses (17) are connected via a network (N1), the output method comprising:
a first output data generation step of generating, upon receipt of an output request of target output data, first output data based on the target output data, the first output data having a value of a first output setting item set up by a user when inputting the output request;
a second output data generation step of generating second output data based on the first output data, the second output data having a value of a second output setting item when outputting to an output apparatus (17), and outputting the second output data to the output apparatus (17);
an output control step of determining the value of the second output setting item based on priority information which defines a higher priority between the value of the first output setting item and a value of a third output setting item which is set up for the output apparatus in the second output data generation step; and a setting information holding step of storing a rule for controlling the outputting of the second output data,
wherein the output control step includes giving a higher priority to the value of the third output setting item than to the value of the first output setting item, as the value of the second output setting item, when the third output setting item has priority over the first output setting item according to the priority information, and giving a higher priority to the value of the first output setting item than to the value of the third output setting item, as the value of the second output setting item, when the first output setting item has priority over the third output setting item according to the priority information;
**characterized in that**
the output control step includes determining one of the output apparatuses as an output destination based on the rule, determining the value of the second output setting item by determining a higher priority between the value of the first output setting item and the value of the third output setting item which is set up for the one of the output apparatuses (17) in the second output data generation step, and outputting the second output data,
if the first output setting item of the first output data is generated only in the first output data generation step and not in the second output data generation step, said first output setting item is discarded during an outputting process,
if the third output setting item is generated only in the second output data generation step and not in the first output data generation step, the value of said third output setting item in the second output data generation step becomes the value of the second output setting item, and
if a fourth output setting item is generated in both the first output data generation step and the second output data generation step, the value of the fourth output setting item is set based on the priority information.

7. The output method according to claim 6, wherein, when the output destination is an information processing apparatus in which the second output data is registered, the output control step includes sending a request of registration of the second output data in the information processing apparatus to an output data registration unit, and the output data registration unit registers the second output data in the information processing apparatus in response to receiving the request.

8. The output method according to claim 6, wherein the rule specifies a value of an output setting item associated with a condition depending on whether the condition is met, and, when the rule is applied, the output control step includes determining a higher priority of the value of the output setting item specified by the rule over the value of the first output setting item and the value of the third output setting item.

9. The output method according to any of claims 6 to 8, wherein the first output data generation step is performed by a virtual device driver and the second output data generation step is performed by a real device driver.

10. The output method according to claim 9, wherein the first output data generation step is performed by a virtual printer driver and the second output data generation step is performed by a real printer driver.

## Patentansprüche

1. Ausgabesystem (1), bei dem ein Endgerät (16) und ein oder mehrere Ausgabegeräte (17) über ein Netzwerk (N1) verbunden sind, welches umfasst:
eine erste Ausgabedaten-Erzeugungseinheit (22a), die bei Empfang einer Ausgabeanforderung von Zielausgabedaten erste Ausgabedaten basierend auf den Zielausgabedaten erzeugt, wobei die ersten Ausgabedaten einen Wert eines ersten Ausgabeeinstellelements aufweisen, der durch einen Benutzer beim Eingeben der Ausgabeanforderung eingerichtet wird;
eine zweite Ausgabedaten-Erzeugungseinheit (23), die zweite Ausgabedaten basierend auf den ersten Ausgabedaten erzeugt, wobei die zweiten Ausgabedaten einen Wert eines zweiten Ausgabeeinstellelements aufweisen, wenn sie an ein Ausgabegerät (17) ausgegeben werden, und die zweiten Ausgabedaten an die Ausgabegerät (17) ausgibt;
eine Ausgabesteuereinheit (64), die den Wert des zweiten Ausgabeeinstellelements auf der Grundlage von Prioritätsinformationen bestimmt, die eine höhere Priorität zwischen dem Wert des ersten Ausgabeeinstellelements und einem Wert eines dritten Ausgabeeinstellelements definieren, der für das Ausgabegerät (17) in der zweiten Ausgabedaten-Erzeugungseinheit (23) eingerichtet wird; und eine Einstellinformationshalteeinheit (86), die eine Regel zum Steuern der Ausgabe der zweiten Ausgabedaten speichert,
wobei die Ausgabesteuereinheit (64) dem Wert des dritten Ausgabeeinstellelements eine höhere Priorität gibt als dem Wert des ersten Ausgabeeinstellelements, als dem Wert des zweiten Ausgabeeinstellelements, wenn das dritte Ausgabeeinstellelement gemäß der Prioritätsinformation Priorität gegenüber dem ersten Ausgabeeinstellelement hat, und dem Wert des ersten Ausgabeeinstellelements eine höhere Priorität gibt als dem Wert des dritten Ausgabeeinstellelements, als dem Wert des zweiten Ausgabeeinstellelements, wenn das erste Ausgabeeinstellelement gemäß der Prioritätsinformation Priorität gegenüber dem dritten Ausgabeeinstellelement hat;
**dadurch gekennzeichnet, dass**
die Ausgabesteuereinheit (64) eines der Ausgabegeräte (17) als ein Ausgabeziel basierend auf der Regel bestimmt, den Wert des zweiten Ausgabeeinstellelements bestimmt, durch Bestimmen einer höheren Priorität zwischen dem Wert des ersten Ausgabeeinstellelements und dem Wert des dritten Ausgabeeinstellelements, das für die eine der Ausgabegeräten (17) in der zweiten Ausgabedaten-Erzeugungseinheit (23) eingerichtet ist, und bewirkt, dass die zweite Ausgabedaten-Erzeugungseinheit (64) die zweiten Ausgabedaten ausgibt,
wenn das erste Ausgabeeinstellelement der ersten Ausgabedaten nur in der ersten Ausgabedaten-Erzeugungseinheit (22a) enthalten ist und nicht in der zweiten Ausgabedaten-Erzeugungseinheit (23), das erste Ausgabeeinstellelement während eines Ausgabeprozesses verworfen wird,
wenn das dritte Ausgabeeinstellelement nur in der zweiten Ausgabedaten-Erzeugungseinheit (23) enthalten ist und nicht in der ersten Ausgabedaten-Erzeugungseinheit (22a), der Wert des dritten Ausgabeeinstellelements in der zweiten Ausgabedaten-Erzeugungseinheit (23) der Wert des zweiten Ausgabeeinstellelements wird, und
wenn ein viertes Ausgabeeinstellelement sowohl in der ersten Ausgabedaten-Erzeugungseinheit (22a) als auch in der zweiten Ausgabedaten-Erzeugungseinheit (23) enthalten ist, der Wert des vierten Ausgabeeinstellelements basierend auf der Prioritätsinformation eingestellt wird.

2. Ausgabesystem (1) nach Anspruch 1, wobei, wenn das Ausgabeziel eine Informationsverarbeitungsvorrichtung ist, in der die zweiten Ausgabedaten registriert sind, die Ausgabesteuereinheit eine Registrierungsanforderung der zweiten Ausgabedaten in der Informationsverarbeitungsvorrichtung zu einer Ausgabedaten-Registriereinheit sendet, und die Ausgabedaten-Registriereinheit die zweiten Ausgabedaten in der Informationsverarbeitungsvorrichtung als Reaktion auf den Empfang der Anfrage registriert.

3. Ausgabesystem (1) nach Anspruch 1, wobei die Regel einen Wert eines Ausgabeeinstellelements angibt, der einer Bedingung zugeordnet ist, abhängig davon, ob die Bedingung erfüllt ist, und wenn die Regel angewendet wird, die Ausgabesteuereinheit (64) eine höhere Priorität des Werts des durch die Regel spezifizierten Ausgabeeinstellelements gegenüber dem Wert des ersten Ausgabeeinstellelements und dem Wert des dritten Ausgabeeinstellelements bestimmt.

4. Ausgabesystem (1) nach einem der Ansprüche 1 bis 3, wobei die erste Ausgabedaten-Erzeugungseinheit (22a) ein virtueller Gerätetreiber ist und die zweite Ausgabedaten-Erzeugungseinheit (23) ein realer Gerätetreiber ist.

5. Ausgabesystem (1) nach Anspruch 4, wobei die erste Ausgabedaten-Erzeugungseinheit (22a) ein virtueller Druckertreiber ist und die zweite Ausgabedaten-Erzeugungseinheit (23) ein realer Druckertreiber ist.

6. Ausgabeverfahren, das von einem Ausgabesystem (1) durchgeführt wird, in dem ein Endgerät (16) und ein oder mehrere Ausgabegeräte (17) über ein Netzwerk (N1) verbunden sind, wobei das Ausgabeverfahren umfasst:
einen ersten Ausgabedatenerzeugungsschritt zum Erzeugen erster Ausgabedaten basierend auf den Zielausgabedaten bei Empfang einer Ausgabeanforderung von Zielausgabedaten, wobei die ersten Ausgabedaten einen Wert eines ersten Ausgabeeinstellelements aufweisen, der von einem Benutzer bei der Eingabe der Ausgabeanforderung eingerichtet wird;
einen zweiten Ausgabedatenerzeugungsschritt zum Erzeugen zweiter Ausgabedaten basierend auf den ersten Ausgabedaten, wobei die zweiten Ausgabedaten einen Wert eines zweiten Ausgabeeinstellelements aufweisen, wenn sie an ein Ausgabegerät (17) ausgegeben werden, und zum Ausgeben der zweiten Ausgabedaten an das Ausgabegerät (17);
einen Ausgabesteuerschritt zum Bestimmen des Werts des zweiten Ausgabeeinstellelements basierend auf Prioritätsinformationen, die eine höhere Priorität zwischen dem Wert des ersten Ausgabeeinstellelements und einem Wert eines dritten Ausgabeeinstellelements definieren, der für das Ausgabegerät im zweiten Ausgabedaten-Erzeugungsschritt eingerichtet wird; und einen Einstellungsinformationshalteschritt zum Speichern einer Regel zum Steuern der Ausgabe der zweiten Ausgabedaten,
wobei der Ausgabesteuerungsschritt umfasst, dem Wert des dritten Ausgabeeinstellelements eine höhere Priorität zu geben als dem Wert des ersten Ausgabeeinstellelements, als dem Wert des zweiten Ausgabeeinstellelements, wenn das dritte Ausgabeeinstellelement Priorität gegenüber dem ersten Ausgabeeinstellelement gemäß der Prioritätsinformation hat, und dem Wert des ersten Ausgabeeinstellelements eine höhere Priorität als dem Wert des dritten Ausgabeeinstellelements, als dem Wert des zweiten Ausgabeeinstellelements, bei der ersten Ausgabeeinstellung zuzuweisen, wenn das erste Ausgabeeinstellelement gemäß der Prioritätsinformation Priorität gegenüber dem dritten Ausgabeeinstellelement hat;
**dadurch gekennzeichnet, dass**
der Ausgabesteuerschritt das Bestimmen eines der Ausgabegeräte als ein Ausgabeziel basierend auf der Regel umfasst, das Bestimmen des Werts des zweiten Ausgabeeinstellelements durch Bestimmen einer höheren Priorität zwischen dem Wert des ersten Ausgabeeinstellelements und dem Wert der dritten Ausgabeeinstellelements, der für das eine der Ausgabegeräte (17) in dem zweiten Ausgabedaten-Erzeugungsschritt eingerichtet wird, und Ausgeben der zweiten Ausgabedaten,
wenn das erste Ausgabeeinstellelement der ersten Ausgabedaten nur in dem ersten Ausgabedatenerzeugungsschritt und nicht in dem zweiten Ausgabedatenerzeugungsschritt erzeugt wird, das erste Ausgabeeinstellelement während eines Ausgabeprozesses verworfen wird,
wenn das dritte Ausgabeeinstellelement nur im zweiten Ausgabedatenerzeugungsschritt und nicht im ersten Ausgabedatenerzeugungsschritt erzeugt wird, der Wert des dritten Ausgabeeinstellelements im zweiten Ausgabedatenerzeugungsschritt der Wert des zweiten Ausgabeeinstellelements wird, und
wenn sowohl im ersten Ausgabedaten-Erzeugungsschritt als auch im zweiten Ausgabedaten-Erzeugungsschritt ein viertes Ausgabeeinstellelement erzeugt wird, der Wert des vierten Ausgabeeinstellelements basierend auf der Prioritätsinformation eingestellt wird.

7. Ausgabeverfahren nach Anspruch 6, wobei, wenn das Ausgabeziel eine Informationsverarbeitungsvorrichtung ist, in der die zweiten Ausgabedaten registriert sind, der Ausgabesteuerschritt das Senden einer Registrierungsanforderung der zweiten Ausgabedaten in der Informationsverarbeitungsvorrichtung an eine Ausgabedaten-Registriereinheit umfasst, und die Ausgabedaten-Registriereinheit die zweiten Ausgabedaten in der Informationsverarbeitungsvorrichtung als Reaktion auf den Empfang der Anforderung registriert.

8. Ausgabeverfahren nach Anspruch 6, wobei die Regel abhängig davon, ob die Bedingung erfüllt ist, einen Wert eines Ausgabeeinstellelements angibt, der einer Bedingung zugeordnet ist, und wenn die Regel angewendet wird, der Ausgabesteuerungsschritt das Bestimmen einer höheren Priorität des Werts des Ausgabeeinstellelements umfasst, der durch die Regel über den Wert des ersten Ausgabeeinstellelements und den Wert des dritten Ausgabeeinstellelements spezifiziert ist.

9. Ausgabeverfahren nach einem der Ansprüche 6 bis 8, wobei der erste Ausgabedaten-Erzeugungsschritt von einem virtuellen Gerätetreiber durchgeführt wird und der zweite Ausgabedaten-Erzeugungsschritt von einem realen Gerätetreiber durchgeführt wird.

10. Ausgabeverfahren nach Anspruch 9, wobei der erste Ausgabedaten-Erzeugungsschritt von einem virtuellen Druckertreiber durchgeführt wird und der zweite Ausgabedaten-Erzeugungsschritt von einem realen Druckertreiber durchgeführt wird.

## Revendications

1. Système de sortie (1) dans lequel un appareil terminal (16) et un ou plusieurs appareils de sortie (17) sont connectés via un réseau (N1), comprenant :
une première unité de génération de données de sortie (22a) qui génère, à la réception d'une demande de sortie de données de sortie cibles, des premières données de sortie basées sur les données de sortie cibles, les premières données de sortie ayant une valeur d'un premier élément de réglage de sortie réglé par un utilisateur lors de l'entrée de la demande de sortie ;
une deuxième unité de génération de données de sortie (23) qui génère des deuxièmes données de sortie sur la base des premières données de sortie, les deuxièmes données de sortie ayant une valeur d'un deuxième élément de réglage de sortie lors de la sortie vers un appareil de sortie (17), et sort les deuxièmes données de sortie à l'appareil de sortie (17) ;
une unité de commande de sortie (64) qui détermine la valeur du deuxième élément de réglage de sortie sur la base d'informations de priorité qui définissent une priorité plus élevée entre la valeur du premier élément de réglage de sortie et une valeur d'un troisième élément de réglage de sortie qui est réglé pour l'appareil de sortie (17) dans la deuxième unité de génération de données de sortie (23) ; et une unité de stockage d'informations de réglage (86) qui stocke une règle pour commander la sortie des deuxièmes données de sortie,
dans lequel l'unité de commande de sortie (64) donne une priorité plus élevée à la valeur du troisième élément de réglage de sortie qu'à la valeur du premier élément de réglage de sortie, en tant que valeur du deuxième élément de réglage de sortie, lorsque le troisième élément de réglage de sortie a priorité sur le premier élément de réglage de sortie selon les informations de priorité, et donne une priorité plus élevée à la valeur du premier élément de réglage de sortie qu'à la valeur du troisième élément de réglage de sortie, en tant que valeur du deuxième élément de réglage de sortie, lorsque le premier élément de réglage de sortie a la priorité sur le troisième élément de réglage de sortie selon les informations de priorité ;
**caractérisé en ce que**
l'unité de commande de sortie (64) détermine l'un des appareils de sortie (17) en tant que destination de sortie sur la base de la règle, détermine la valeur du deuxième élément de réglage de sortie en déterminant une priorité plus élevée entre la valeur du premier élément de réglage de sortie et la valeur du troisième élément de réglage de sortie qui est réglé pour l'un des appareils de sortie (17) dans la deuxième unité de génération de données de sortie (23), et amène la deuxième unité de génération de données de sortie (64) à sortir les deuxièmes données de sortie,
si le premier élément de réglage de sortie des premières données de sortie est inclus uniquement dans la première unité de génération de données de sortie (22a) et non dans la deuxième unité de génération de données de sortie (23), ledit premier élément de réglage de sortie est rejeté pendant un processus de sortie,
si le troisième élément de réglage de sortie est inclus uniquement dans la deuxième unité de génération de données de sortie (23) et non dans la première unité de génération de données de sortie (22a), la valeur dudit troisième élément de réglage de sortie dans la deuxième unité de génération de données de sortie (23) devient la valeur du deuxième élément de réglage de sortie, et
si un quatrième élément de réglage de sortie est inclus à la fois dans la première unité de génération de données de sortie (22a) et dans la deuxième unité de génération de données de sortie (23), la valeur du quatrième élément de réglage de sortie est réglé sur la base des informations de priorité.

2. Système de sortie (1) selon la revendication 1, dans lequel, lorsque la destination de sortie est un appareil de traitement d'informations dans lequel les deuxièmes données de sortie sont enregistrées, l'unité de commande de sortie envoie une demande d'enregistrement des deuxièmes données de sortie dans l'appareil de traitement d'informations à une unité d'enregistrement de données de sortie, et l'unité d'enregistrement de données de sortie enregistre les deuxièmes données de sortie dans l'appareil de traitement d'informations en réponse à la réception de la demande.

3. Système de sortie (1) selon la revendication 1, dans lequel la règle spécifie une valeur d'un élément de réglage de sortie associé à une condition selon que la condition est satisfaite, et, lorsque la règle est appliquée, l'unité de commande de sortie (64) détermine une priorité plus élevée de la valeur de l'élément de réglage de sortie spécifié par la règle sur la valeur du premier élément de réglage de sortie et la valeur du troisième élément de réglage de sortie.

4. Système de sortie (1) selon l'une quelconque des revendications 1 à 3, dans lequel la première unité de génération de données de sortie (22a) est un pilote de périphérique virtuel et la deuxième unité de génération de données de sortie (23) est un pilote de périphérique réel.

5. Système de sortie (1) selon la revendication 4, dans lequel la première unité de génération de données de sortie (22a) est un pilote d'imprimante virtuelle et la deuxième unité de génération de données de sortie (23) est un pilote d'imprimante réelle.

6. Procédé de sortie exécuté par un système de sortie (1) dans lequel un appareil terminal (16) et un ou plusieurs appareils de sortie (17) sont connectés via un réseau (N1), le procédé de sortie comprenant :
une première étape de génération de données de sortie consistant à générer, lors de la réception d'une demande de sortie de données de sortie cible, des premières données de sortie basées sur les données de sortie cible, les premières données de sortie ayant une valeur d'un premier élément de réglage de sortie réglé par un utilisateur lors de l'entrée de la demande de sortie ;
une deuxième étape de génération de données de sortie consistant à générer des deuxièmes données de sortie sur la base des premières données de sortie, les deuxièmes données de sortie ayant une valeur d'un deuxième élément de réglage de sortie lors de la sortie vers un appareil de sortie (17), et à sortir les deuxièmes données de sortie vers l'appareil de sortie (17) ;
une étape de commande de sortie consistant à déterminer la valeur du deuxième élément de réglage de sortie sur la base d'informations de priorité qui définissent une priorité plus élevée entre la valeur du premier élément de réglage de sortie et une valeur d'un troisième élément de réglage de sortie qui est configuré pour l'appareil de sortie dans la deuxième étape de génération de données de sortie ; et une étape de stockage d'informations de réglage consistant à stocker une règle pour commander la sortie des deuxièmes données de sortie,
dans lequel l'étape de commande de sortie comprend l'attribution d'une priorité plus élevée à la valeur du troisième élément de réglage de sortie qu'à la valeur du premier élément de réglage de sortie, en tant que valeur du deuxième élément de réglage de sortie, lorsque le troisième élément de réglage de sortie a priorité sur le premier élément de réglage de sortie selon les informations de priorité, et l'attribution d'une priorité plus élevée à la valeur du premier élément de réglage de sortie qu'à la valeur du troisième élément de réglage de sortie, en tant que valeur du deuxième élément de réglage de sortie, lorsque le premier élément de réglage de sortie a priorité sur le troisième élément de réglage de sortie selon les informations de priorité ;
**caractérisé en ce que**
l'étape de commande de sortie comprend la détermination de l'un des appareils de sortie en tant que destination de sortie sur la base de la règle, la détermination de la valeur du deuxième élément de réglage de sortie en déterminant une priorité plus élevée entre la valeur du premier élément de réglage de sortie et la valeur du troisième élément de réglage de sortie qui est configuré pour l'un des appareils de sortie (17) dans la deuxième étape de génération de données de sortie, et la sortie des deuxièmes données de sortie,
si le premier élément de réglage de sortie des premières données de sortie est généré uniquement dans la première étape de génération de données de sortie et non dans la deuxième étape de génération de données de sortie, ledit premier élément de réglage de sortie est rejeté pendant un processus de sortie,
si le troisième élément de réglage de sortie est généré uniquement dans la deuxième étape de génération de données de sortie et non dans la première étape de génération de données de sortie, la valeur dudit troisième élément de réglage de sortie dans la deuxième étape de génération de données de sortie devient la valeur du deuxième élément de réglage de sortie, et si un quatrième élément de réglage de sortie est généré à la fois dans la première étape de génération de données de sortie et dans la deuxième étape de génération de données de sortie, la valeur du quatrième élément de réglage de sortie est réglée sur la base des informations de priorité.

7. Procédé de sortie selon la revendication 6, dans lequel, lorsque la destination de sortie est un appareil de traitement d'informations dans lequel les deuxièmes données de sortie sont enregistrées, l'étape de commande de sortie comprend l'envoi d'une demande d'enregistrement des deuxièmes données de sortie dans l'appareil de traitement d'informations à une unité d'enregistrement de données de sortie, et l'unité d'enregistrement de données de sortie enregistre les deuxièmes données de sortie dans l'appareil de traitement d'informations en réponse à la réception de la demande.

8. Procédé de sortie selon la revendication 6, dans lequel la règle spécifie une valeur d'un élément de réglage de sortie associée à une condition selon que la condition est satisfaite, et, lorsque la règle est appliquée, l'étape de commande de sortie comprend la détermination d'une priorité plus élevée de la valeur de l'élément de réglage de sortie spécifiée par la règle sur la valeur du premier élément de réglage de sortie et la valeur du troisième élément de réglage de sortie.

9. Procédé de sortie selon l'une quelconque des revendications 6 à 8, dans lequel la première étape de génération de données de sortie est exécutée par un pilote de périphérique virtuel et la deuxième étape de génération de données de sortie est exécutée par un pilote de périphérique réel.

10. Procédé de sortie selon la revendication 9, dans lequel la première étape de génération de données de sortie est exécutée par un pilote d'imprimante virtuelle et la deuxième étape de génération de données de sortie est exécutée par un pilote d'imprimante réelle.
